# EUROPEAN PATENT SPECIFICATION

(11) **EP 4 435 916 B1**
(45) Date of publication and mention of the grant of the patent: **11.03.2026**
(21) Application number: 21965176.7
(22) Date of filing: 26.11.2021
(51) Int. Cl.: H01M 10/0525, H01M 10/04, H01M 50/179, H01M 10/0587, H01M 50/107, H01M 50/152, H01M 50/148, H01M 50/188, H01M 50/538, H01M 50/55, H01M 50/559

(54) **BATTERY CELL AND MANUFACTURING METHOD AND DEVICE THEREFOR, BATTERY, AND ELECTRICAL DEVICE**
BATTERIEZELLE UND HERSTELLUNGSVERFAHREN UND VORRICHTUNG DAFÜR, BATTERIE UND ELEKTRISCHE VORRICHTUNG
ÉLÉMENT DE BATTERIE ET PROCÉDÉ ET DISPOSITIF ASSOCIÉS DE FABRICATION, BATTERIE ET DISPOSITIF ÉLECTRIQUE

(43) Date of publication of application: 25.09.2024
(73) Proprietor: Contemporary Amperex Technology (Hong Kong) Limited, Central, Central And Western District (HK)
(72) Inventor: WEN, Yuqian, Ningde, Fujian 352100 (CN); ZHANG, Wei, Ningde, Fujian 352100 (CN); LI, Meng, Ningde, Fujian 352100 (CN); ZHU, Wenqi, Ningde, Fujian 352100 (CN); BAI, Qinglin, Ningde, Fujian 352100 (CN); TANG, Minghao, Ningde, Fujian 352100 (CN); ZHANG, Xiaowei, Ningde, Fujian 352100 (CN)
(74) Representative: Gong, Jinping
(86) International application number: PCT/CN2021/133425
(87) International publication number: WO 2023/092441

(56) References cited:
- CN-A- 101 209 507
- CN-A- 110 212 233
- CN-A- 111 370 601
- CN-A- 113 571 848
- CN-U- 201 673 939
- CN-U- 203 085 702
- CN-Y- 200 953 351
- JP-A- H11 339 769

## Description

### Technical Field

The present application relates to the technical field of batteries, and more particularly to a battery cell, a method and device for manufacturing the battery cell, a battery, and a power consuming device.

### Background Art

With the advantages such as high energy density, high power density, many times of cyclic use, and long storage time batteries such as lithium-ion batteries have been widely applied in electric vehicles. CN 113 571 848 A discloses a battery cell according to the state of the art.

However, how to enhance the working performance of batteries of the electric vehicles has been always a problem in this industry.

### Summary of the Invention

The present application aims to enhance the performance of batteries.

According to a first aspect of the present application, a battery cell is provided, including:
a housing having an opening;
an end cap assembly for closing the opening, the end cap assembly including an end cap body and an electrode terminal, the electrode terminal being connected to the end cap body in an insulating manner; and
an electrode assembly arranged in the housing, the electrode assembly being of a wound structure and including: a wound main body, a first tab and a second tab, the first tab and the second tab having opposite polarities and being connected to the same side of the wound main body along a winding axis of the wound structure;
wherein the first tab is electrically connected to the electrode terminal, and the second tab is electrically connected to the end cap body;
wherein the end cap assembly further comprises: an insulating assembly arranged between the electrode terminal and the end cap body and configured to connect the electrode terminal to the end cap body in an insulating manner;
wherein the end cap body is provided with a first through hole, one end of the first through hole away from the electrode assembly is provided with a first groove, the electrode terminal is arranged in the first through hole, the electrode terminal comprises a terminal main body portion, an outer side wall of the terminal main body portion is provided with a first annular groove, and the insulating assembly comprises:
   a first insulating ring comprising a mating section and a limiting section connected to each other, the mating section being arranged between an inner side wall of the first through hole and the outer side wall of the terminal main body portion, a side wall of the mating section close to the electrode terminal being provided with a second annular groove, and the limiting section abutting against a bottom wall of the first groove; and
   a connecting ring , a radially outer end of the connecting ring being embedded in the second annular groove, and a radially inner end of the connecting ring being embedded in the first annular groove.

In this embodiment, the first tab and the second tab are led out from the same end of the wound main body. It is only necessary to reserve an electrical connection space at one end of the electrode assembly, eliminating the need for providing electrode terminals respectively at two ends of the battery cell, so that the overall energy density of the battery cell can be effectively increased. Where the capacity of the battery cell is constant, the volume of the battery cell can be reduced, making it easier to lay out the battery in the power consuming device.

Moreover, such a battery cell is provided with only one electrode terminal, the first tab is electrically connected to the electrode terminal, and the second tab is directly electrically connected to the end cap body, so that the structure and the assembly process of the battery cell can be simplified. By omitting one electrode terminal, a larger space can be left on the end cap body, making it easy to lay out a liquid injection component and a pressure relief component on the end cap body, leaving ample space for arranging a temperature acquisition component, a bus member between battery cells, and various wires, and also contributing to increasing the cross-sectional area of the electrode terminal to increase the current flow capacity of the battery cell. This design has greater advantages when the area of the end cap body is small.

Furthermore, not only can the electrode terminal be mounted to the end cap body, but the electrode terminal can also be reliably insulated from the end cap body, so that when the end cap body serves as an electrode terminal, it is possible to prevent short circuits between the electrode terminals having different polarities, improving the working reliability of the battery cell.

Additionally, the electrode terminal is connected to the first insulating ring via the connecting ring, the first groove can be arranged to limit the freedom of movement of the first insulating ring toward the electrode assembly along the winding axis, and the tight fit of the first insulating ring with the first through hole and the first groove can also prevent the freedom of movement of the electrode terminal away from the electrode assembly along the winding axis. In this way, the electrode terminal can be fixed on the end cap body, and the insulation between the electrode terminal and the end cap body can be implemented, thereby preventing short circuits and improving the working reliability of the battery cell.

In some embodiments, the first tab and the second tab both extend along the entire circumference of the wound structure and are arranged spaced apart from each other in a radial direction of the wound structure.

In this embodiment, since each tab continuously extends and is wound by at least one turn, the tab has a better connection strength with the wound main body in a circumferential direction, so that a root portion of the tab has a better self-supporting effect, a crumpling phenomenon of the tab is prevented in the process of flattening the tab by applying a circumferential acting force, and the shape of a flattened region is stabilized. The effects of welding the first tab to the electrode terminal, and the second tab to the end cap body are optimized, it is ensured that the electrode assembly reliably transmits electric energy outwards, and the current flow capacity is improved. Furthermore, particles generated during welding of the tabs are less prone to dropping into a gap between the first electrode plate and the second electrode plate in the circumferential direction, so that the working reliability of the electrode assembly can be improved, and the problem of short circuits or scratch of the electrode plates can be solved. Moreover, by providing the continuous tabs, a process of die-cutting the electrode plates can be simplified, and when the electrode plates are wound to form the wound main body, there is also no need to perform alignment of the tabs, the process can thus be simplified, and the production efficiency of the electrode assembly can be increased.

In addition, since the first tab and the second tab are arranged spaced apart from each other in the radial direction, a spacing region forms a liquid guiding region, which can not only spatially separate the first tab from the second tab to provide an insulating effect, but can also make a liquid electrolyte infiltrate from the liquid guiding region to the inside of the wound main body, ensuring the infiltration performance of the electrode assembly, and improving the liquid absorption effect, so that the liquid electrolyte fully reacts with active materials on the first electrode plate and the second electrode plate during charging and discharging processes of the battery, thereby optimizing the performance of the battery cell. The liquid electrolyte can be guided to flow into the interior of the wound main body.

In some embodiments, the electrode terminal is located at the center of the end cap body.

In this embodiment, a larger space can be left on the end cap body in the entire outer peripheral region of the electrode terminal, making it easy to lay out a liquid injection component and a pressure relief component on the end cap body, leaving ample space for arranging a temperature acquisition component, a bus member between battery cells, and various wires, and also contributing to increasing the cross-sectional area of the electrode terminal to increase the current flow capacity of the battery cell.

In some embodiments, the connecting ring takes the form of an insulating ring.

This embodiment can further improve the insulation between the electrode terminal and the end cap body, prevent short circuits, and improve the working reliability of the battery cell. Optionally, since the first insulating ring can already insulate the electrode terminal from the end cap body, the connecting ring may also be made of a metal material to improve the connection reliability between the electrode terminal and the first insulating ring.

In some embodiments, the electrode terminal further includes an extension portion, the extension portion being connected to the terminal main body portion and located on a side of the first annular groove close to the electrode assembly, and the extension portion extending outwardly in the radial direction of the wound structure for supporting at least one of the first insulating ring and the connecting ring; and the insulating assembly further includes: a third insulating ring arranged between the extension portion and the end cap body.

The end cap assembly in this embodiment facilitates the machining of individual parts by providing a combined insulating assembly, and can also implement the connection and insulation between the electrode terminal and the end cap body after combination. The insulating assembly can limit the freedom of relative movement between the electrode terminal and the end cap body in the direction of the winding axis, and can also limit the freedom of radial movement of the electrode terminal in the first through hole, so that the electrode terminal is mounted more firmly. Furthermore, by providing the first insulating ring, the connecting ring and the third insulating ring, all possible contact positions between the electrode terminal and the end cap body can be fully covered to improve the insulation performance, thereby improving the working reliability of the battery cell. Moreover, the assembly of the battery cell is facilitated by forming an integrated end cap assembly.

**In** some embodiments, an adapter assembly is further included, which is arranged between the end cap assembly and the electrode assembly, wherein the adapter assembly includes:
an adapter ring configured to electrically connect the second tab to the end cap body;
an adapter disk arranged in a hollow region enclosed by an inner wall of the adapter ring, and configured to electrically connect the first tab to the electrode terminal; and
a fourth insulating ring configured to connect the adapter ring to the adapter disk in an insulating manner.

In this embodiment, by providing a combined adapter assembly, during assembly, the adapter ring, the adapter disk and the fourth insulating ring can be assembled into the adapter assembly first, and the adapter assembly is then placed on the top of the tab for welding, so that the relative position between the adapter ring and the adapter disk can be easily maintained, to ensure the positioning effect during welding. Moreover, when the battery is subjected to vibration and impact during use, the adapter ring and adapter disk limit each other, to prevent the welded portion from loosening. In addition, the adapter ring and the adapter disk are separated by the fourth insulating ring, so that short circuits between the adapter ring and the adapter disk can be prevented, improving the working reliability of the battery cell.

In some embodiments, an inner side wall of the fourth insulating ring is provided with a third annular groove, an outer side wall of the fourth insulating ring is provided with a fourth annular groove, the adapter disk is embedded in the third annular groove, and the adapter ring is embedded in the fourth annular groove.

In this embodiment, the adapter ring, the adapter disk and the fourth insulating ring can be easily assembled into the adapter assembly, the connection is reliable, the assembly is facilitated, the assembly efficiency can be improved, and the components are removably connected to each other, so that where the electrical connection of the adapter assembly is implemented by welding or other means, if some parts are damaged, they can be easily disconnected and replaced without the need for replacing the entire adapter assembly.

In some embodiments, a face of the adapter disk close to the end cap assembly is provided with a second groove, and the first tab is connected to the adapter disk in a position where second groove is provided; and/or a face of the adapter ring close to the end cap assembly is provided with a third groove, and the second tab is connected to the adapter ring in a position where the third groove is provided.

In this embodiment, the thickness of the adapter disk in the welding region is reduced by providing the second groove, and welding can be directly performed from the outside of the adapter disk after the adapter assembly is placed on the electrode assembly, so that the assembly process is simplified, and the firmness of the welding can be improved to reliably implement the electrical connection between the adapter disk and the first tab; and the thickness of the adapter ring in the welding region is reduced by providing the third groove, and welding can be directly performed from the outside of the adapter ring after the adapter assembly is placed on the electrode assembly, so that the assembly process is simplified, and the firmness of the welding can be improved to reliably implement the electrical connection between the adapter ring and the second tab.

In some embodiments, the fourth insulating ring includes:
a main body section arranged between the adapter ring and the adapter disk and configured to connect the adapter ring to the adapter disk in an insulating manner; and
an extension section connected to one end of the main body section close to the electrode assembly, the extension section being located between the first tab and the second tab and configured to insulate the first tab from the second tab.

In this embodiment, by extending the extension section B of the fourth insulating ring between the first tab and the second tab, the first tab can be reliably insulated from the second tab, preventing short circuits, and improving the working reliability of the battery cell. Moreover, after the fourth insulating ring is mounted, the insulation between the first tab and the second tab is implemented, and there is no need to provide additional insulating members, so that the structure can be simplified and the assembly efficiency can be improved.

In some embodiments, a face of the end cap body away from the electrode assembly is provided with a fourth groove, and the second tab is connected to the end cap body in a position corresponding to the fourth groove.

In this embodiment, the thickness of the end cap body in the welding region is reduced by providing the fourth groove on the end cap body, and welding can be directly performed from the outside of the end cap body after the end cap assembly is mounted to the housing, so that the assembly process is simplified, and the firmness of the welding can be improved, to reliably implement the electrical connection between the end cap body and the second tab.

In some embodiments, the end cap assembly further includes a first sealing member, and a surface of the electrode terminal away from the electrode assembly is provided with a fifth groove, a bottom of the fifth groove is provided with a second through hole for injecting a liquid electrolyte, and the first sealing member mates with the fifth groove to seal the second through hole.

In this embodiment, it will be implemented that the second through hole for injecting the liquid electrolyte is provided in the electrode terminal, without the need for additionally occupying the space at other positions of the end cap body, thereby leaving ample space for arranging other structures on the end cap body, contributing to increasing the circumferential size of the first sealing member, and making it easy to connect. When the first sealing member and the end cap body are welded to improve the sealing performance, welding is facilitated. Even if there is a welding defect, due to the increased distance between an outer side wall of the first sealing member and the second through hole, the liquid electrolyte, when flowing out, is less likely to seep out from the welded portion, providing a high tolerance for the welding defect.

Moreover, for the structure in which the first tab and the second tab are wound along the entire circumference, the liquid electrolyte can directly reach the hollow region of the electrode assembly through the second through hole provided in the electrode terminal for liquid injection, making the liquid injection process smoother. In addition, the thickness of the electrode terminal in the welding region is reduced by providing the fifth groove, and welding can be directly performed from the outside of the end cap body after the end cap assembly is mounted to the housing, so that the assembly process is simplified, and the firmness of the welding is improved, to reliably implement the electrical connection between the electrode terminal and the first tab.

According to a second aspect of the present application, a battery is provided, including: a battery cell of the above embodiments, and a case. The case is configured to receive the battery cell.

According to a third aspect of the present application, a power consuming device is provided, including the battery of the above-mentioned embodiment. The battery is used for supplying electric energy to the power consuming device.

According to a fourth aspect of the present application, a method for manufacturing a battery cell is provided, the method including:
a component providing step, during which a housing and an end cap assembly are provided, wherein the housing has an opening, the end cap assembly includes an end cap body and an electrode terminal, and the electrode terminal is connected to the end cap body in an insulating manner;
an electrode assembly step, during which an electrode assembly is prepared, and the electrode assembly is put into the housing, wherein the electrode assembly is of a wound structure and includes: a wound main body, a first tab and a second tab, the first tab and the second tab having opposite polarities and being connected to the same side of the wound main body along a winding axis of the wound structure; and
an end cap mounting step, during which the end cap assembly closes the opening, the first tab is electrically connected to the electrode terminal, and the second tab is electrically connected to the end cap body.

According to a fifth aspect of the present application, provided is a device for manufacturing a battery cell, the device including:
a component providing apparatus configured to provide a housing and an end cap assembly, wherein the housing has an opening, the end cap assembly includes an end cap body and an electrode terminal, and the electrode terminal is connected to the end cap body in an insulating manner;
an electrode assembly apparatus configured to prepare an electrode assembly, wherein the electrode assembly is of a wound structure and includes: a wound main body, a first tab and a second tab, the first tab and the second tab having opposite polarities and being connected to the same side of the wound main body along a winding axis of the wound structure; and
an end cap mounting apparatus configured such that the end cap assembly closes the opening, the first tab is electrically connected to the electrode terminal, and the second tab is electrically connected to the end cap body.

### Brief Description of the Drawings

To more clearly illustrate the technical solutions of the embodiments of the present application, the accompanying drawings required in the embodiments of the present application will be briefly described below. Obviously, the accompanying drawings described below are merely some embodiments of the present application, and for those of ordinary skill in the art, other accompanying drawings can be obtained from these accompanying drawings without making creative efforts.
FIG. 1 is a schematic structural diagram of a battery mounted to a vehicle according to some embodiments of the present application.
FIG. 2 is an exploded view of a battery according to some embodiments of the present application.
FIG. 3 is a schematic structural diagram of a battery cell according to a first embodiment of the present application.
FIG. 4 is an exploded view of the battery cell according to the first embodiment of the present application.
FIG. 5 is a developed view of an electrode assembly according to some embodiments.
FIG. 6 is a longitudinal sectional view of the battery cell shown in FIG. 3.
FIG. 7 is an enlarged view of part A of FIG. 6.
FIG. 8 is a schematic structural diagram of the connection between an electrode terminal and an end cap body in FIG. 3.
FIG. 9 is a sectional view of FIG. 8.
FIG. 10 is an exploded view of FIG. 8.
FIG. 11 is a schematic structural diagram of an adapter assembly in FIG. 3 according to some embodiments.
FIG. 12 is an exploded view of FIG. 11.
FIGS. 13A, 13B, 13C and 13D are sectional views of four different fourth insulating rings provided in FIG. 11, respectively.
FIG. 14 is a schematic structural diagram of a battery cell according to a second embodiment of the present application.
FIG. 15 is an exploded view of the battery cell according to the second embodiment of the present application.
FIG. 16 is a longitudinal sectional view of the battery cell shown in FIG. 14.
FIG. 17 is an enlarged view of part B of FIG. 16.
FIG. 18 is a schematic structural diagram of the connection between an electrode terminal and an end cap body in FIG. 14.
FIG. 19 is a sectional view of FIG. 18.
FIG. 20 is an exploded view of FIG. 18.
FIG. 21 is a flowchart of a method for manufacturing a battery cell according to some embodiments of the present application.
FIG. 22 is a schematic diagram showing module composition of a device for manufacturing a battery cell according to some embodiments of the present application.

### List of reference signs:

100. battery cell;
11. housing; 111. opening; 112. recess; 113. bent portion; Q. receiving cavity;
12. end cap assembly; 121. end cap body; 1211. first through hole; 1212. first groove; 1213. fourth groove; 1214. limiting step; 1215. thinned portion; 122. electrode terminal; 122A. terminal main body portion; 122B. extension portion; 1221. first annular groove; 1222. fifth groove; 1222'. second through hole; 123. insulating assembly; 1231. first insulating ring; 1231'. second annular groove; 1231A. mating section; 1231B. limiting section; 1232. connecting ring; 1233. third insulating ring; 124. first sealing member;
13. electrode assembly; 131. wound main body; 132. first tab; 133. second tab; 1. first electrode plate; 1A. first main body portion; 2. second electrode plate; 2A. second main body portion; 3. separator; K. winding axis;
14. adapter assembly; 141. adapter disk; 1411. second groove; 1412. third through hole; 141A. main body portion; 141B. connecting portion; 142. adapter ring; 1421. third groove; 1422. sixth groove; 143. fourth insulating ring; 1431. third annular groove; 1432. fourth annular groove; 143A. main body section; 143B. extension section;
15. insulating film; 16. second sealing member;
200. battery; 201. case; 201A. receiving portion; 201B. first cover body; 201C. second cover body;
300. vehicle; 301. axle; 302. wheel; 303. motor; 304. controller;
400. manufacturing device; 410. component providing apparatus; 420. electrode assembly apparatus; 430. end cap mounting apparatus.

### Detailed Description of Embodiments

The implementations of the present application will be further described in detail below in conjunction with the accompanying drawings and embodiments. The following detailed description of the embodiments and the accompanying drawings are used to illustrate the principle of the present application by way of example and are not intended to limit the scope of the present application. That is, the present application is not limited to the described embodiments.

In the description of the present application, it should be noted that "a plurality of" means two or more, unless otherwise specified. The orientation or position relationship indicated by the terms "upper", "lower", "left", "right", "inner", "outer", etc. is only for the convenience of describing the present application and simplifying the description, rather than indicating or implying that the device or element referred to must have a particular orientation or be constructed and operated in a particular orientation, and therefore should not be construed as a limitation on the present application.

In addition, the terms "first", "second", "third", etc. are merely for descriptive purposes, and should not be construed as indicating or implying the relative importance. The term "perpendicular" does not mean being perpendicular in the strict sense, but within an allowable range of tolerance. The term "parallel" does not mean being parallel in the strict sense, but within an allowable range of tolerance. The orientation terms in the following description all indicate directions shown in the accompanying drawings, and do not limit the specific structure in the present application.

In the description of the present application, it should also be noted that the terms "mounting", "connecting", and "connection" should be interpreted in the broad sense unless explicitly defined and limited otherwise. For example, the connection may be a fixed connection, a detachable connection, or an integral connection, or may be a direct connection, or an indirect connection by means of an intermediate medium. For those of ordinary skill in the art, the specific meanings of the terms mentioned above in the present application can be construed according to specific circumstances.

The phrase "an embodiment" mentioned herein means that the specific features, structures and characteristics described in conjunction with the embodiment may be included in at least some embodiments of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the description of the embodiments of the present application, the term "a plurality of" means two or more (including two), similarly the term "a plurality of groups" means two or more groups (including two groups), and the term "a plurality of pieces" means two or more pieces (including two pieces).

The present application uses the description of the orientations or positional relationships indicated by the terms "upper", "lower", "top", "bottom", "front", "rear", "inner", "outer", etc., which are merely for convenient description of the present application, rather than indicating or implying that a device referred to needs to have a particular orientation or be constructed and operated in a particular orientation, and therefore cannot be construed as limiting the scope of protection of the present application.

A battery cell may include a lithium-ion secondary battery, a lithium-ion primary battery, a lithium-sulfur battery, a sodium/lithium ion battery, a sodium-ion battery or a magnesium-ion battery, etc., which is not limited by the embodiments of the present application. The battery cell may be cylindrical, flat, cuboid or in another shape, which will not be limited by the embodiments of the present application. The battery cells are generally classified into three types depending on the way of package: cylindrical battery cells, prismatic battery cells and pouch battery cells, which will also not be limited in the embodiments of the present application.

An existing battery cell generally includes a housing and an electrode assembly received in the housing, and the interior of the housing is filled with an electrolyte. The electrode assembly is mainly formed by stacking or winding a first electrode plate and a second electrode plate that have opposite polarities, and a separator is generally provided between the first electrode plate and the second electrode plate. The portions of the first electrode plate and the second electrode plate that are coated with an active material form a main body portion of the electrode assembly, and the portions of the first electrode plate and the second electrode plate that are not coated with the active material respectively form a first tab and a second tab. In a lithium-ion battery, the first electrode plate may be a positive electrode plate, which includes a positive electrode current collector and positive electrode active material layers provided on two sides of the positive electrode current collector. The material of the positive electrode current collector may be, for example, aluminum, and a positive electrode active material may be, for example, lithium cobalt oxide, lithium iron phosphate, ternary lithium or lithium manganate, etc. The second electrode plate may be a negative electrode plate, which includes a negative current collector and negative electrode active material layers provided on two sides of the negative current collector. The material of the negative current collector may be, for example, copper, and a negative electrode active material may be, for example, graphite or silicon, etc. The first tab and the second tab may jointly be located at one end of the main body portion or respectively at two ends of the main body portion. During the charging and discharging of the battery cell, the positive electrode active material and the negative electrode active material react with the liquid electrolyte, and the tabs are connected to a terminal to form a current loop.

The existing battery cell is generally provided with a first electrode terminal and a second electrode terminal with opposite polarities, for accessing an electrical circuit for power supply. A first tab is electrically connected to the first electrode terminal, and a second tab is electrically connected to the second electrode terminal. For example, for a cylindrical battery cell, due to the small end area of the battery cell, the second tab and the second electrode terminal are respectively provided at two ends of the battery cell. Correspondingly, the first tab and the second tab are led out from two ends of the electrode assembly, respectively. In practice, the inventors have found that the tab and the electrode terminal at each end will occupy a certain space for electrical connection, which requires more space in a height direction of the battery cell, resulting in an increase in the overall volume of the battery cell and affecting the overall energy density of the battery cell.

In order to increase the energy density of the battery cell, the inventors have thought of arranging the first electrode terminal and the second electrode terminal at the same end of the battery cell. Correspondingly, the first tab and the second tab are led out from the same end of the electrode assembly. However, such an arrangement faces the following two problems.

1. Spatial layout problem: The arrangement of both electrode terminals on an end cap will cause crowding, and the insulation problem of the two electrode terminals also needs to be considered. In addition, it is also necessary to provide a liquid injection hole and a pressure relief component on the end cap, and to arrange a temperature acquisition component, a bus member between battery cells, various wires, etc., so that it is difficult to perform spatial layout when the area of the end cap is small.

2. Insulation problem: The first electrode terminal and the second electrode terminal located at the same end of the battery cell need to be reliably insulated, and the insulation problem also needs to be considered between the first tab and the second tab led out from the same end of the electrode assembly and between the corresponding adapters of the first tab and the second tab, to improve the working reliability of the battery cell.

Based on the discovery of the above problems, starting from the idea of increasing the energy density of the battery cell and improving the spatial layout on the end cap, the inventors of the present application have improved the way the battery cell outputs electric energy.

The battery cell includes a housing, an end cap assembly and an electrode assembly. The end cap assembly includes an end cap body and an electrode terminal. The electrode terminal is connected to the end cap body in an insulating manner. The electrode assembly is arranged in the housing, and the electrode assembly is of a wound structure and includes: a main body portion, a first tab and a second tab, the first tab and the second tab having opposite polarities and being connected to the same side of the main body portion along a winding axis of the wound structure. The first tab is electrically connected to the electrode terminal, and the second tab is electrically connected to the end cap body. Such a battery cell can increase the overall energy density, and by eliminating one electrode terminal, the structure and the assembly process of the battery cell are simplified, and a larger space is left on the end cap body for arranging various components on the end cap.

The battery cell in the embodiments of the present application is applicable to a battery and a power consuming device using the battery.

The power consuming device may be, for example, a mobile phone, a portable apparatus, a laptop, an electric motorcycle, an electric vehicle, a ship, a spacecraft, an electric toy, or an electric tool. For example, the spacecraft includes an airplane, a rocket, a space shuttle, or a spaceship. The electric toy includes a fixed or mobile electric toy, such as a game console, an electric vehicle toy, an electric ship toy, and an electric airplane toy. The electric tool includes an electric tool for metal cutting, an electric tool for grinding, an electric tool for assembling and an electric tool for railways, such as an electric drill, an electric grinder, an electric wrench, an electric screwdriver, an electric hammer, an electric impact drill, a concrete vibrator, and an electric planer.

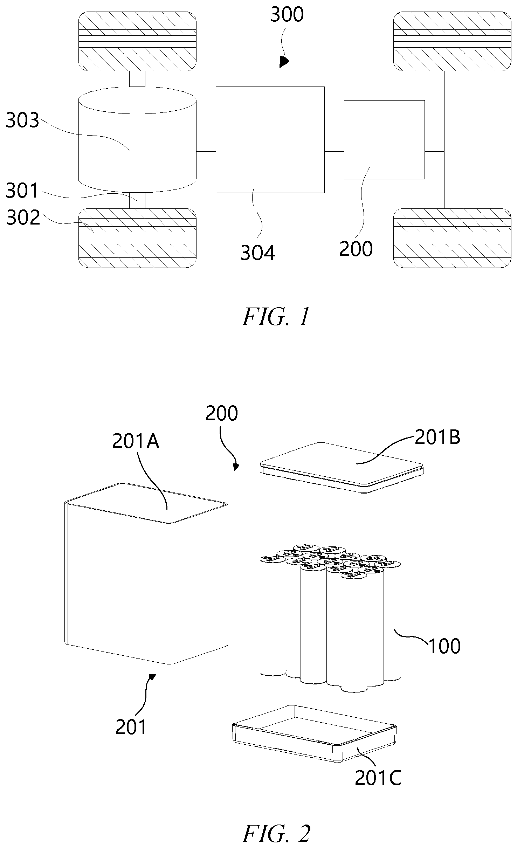

As shown in FIG. 1, the power consuming device may be a vehicle 300, for example, a new energy vehicle. The new energy vehicle may be a battery electric vehicle, a hybrid electric vehicle, an extended-range electric vehicle, or the like. Alternatively, the power consuming device may also be an unmanned aerial vehicle, a ship, or the like. Specifically, the vehicle 300 may include an axle 301, wheels 302 connected to the axle 301, a motor 303, a controller 304 and a battery 200. The motor 303 is configured for driving the axle 301 to rotate, the controller 304 is configured for controlling operation of the motor 303, and the battery 200 may be arranged at the bottom, head, or tail of the vehicle 300, and configured for providing electric energy for operations of the motor 303 and other components in the vehicle.

As shown in FIG. 2, the battery 200 includes a case 201 and a battery cell 100. In the battery 200, one or more battery cells 100 may be provided. If a plurality of battery cells 100 are provided, the plurality of battery cells 100 may be in series connection, in parallel connection or in series-parallel connection, and the series-parallel connection refers to that the plurality of battery cells 100 are in series and parallel connection. It is possible that the plurality of battery cells 100 to be first connected in series or in parallel or in series-parallel to form a plurality of battery modules, and then the plurality of battery modules are connected in series or in parallel or in series-parallel to form a unit and are received inside the case 201. It is also possible that all the battery cells 100 are directly connected in series, or in parallel, or in series-parallel, and a unit composed of all the battery cells 100 is then received in the case 201.

The case 201 is hollow inside and used for receiving one or more battery cells 100, and the case 201 may also be sized in different shapes according to the shape, number, combination manner and other requirements of the received battery cells 100. For example, the case 201 may include: a receiving portion 201A, a first cover body 201B and a second cover body 201C. Two opposite ends of the receiving portion 201A both have openings, and the first cover body 201B and the second cover body 201C are respectively used for closing the openings at the two ends of the receiving portion 201A. In FIG. 2, the receiving portion 201A is of a rectangular tubular structure according to the arrangement of the plurality of battery cells 100.

The battery cell 100 may include, for example, a lithium-ion secondary battery, a lithium-ion primary battery, a lithium-sulfur battery, a sodium/lithium ion battery, or a magnesium-ion battery, etc.

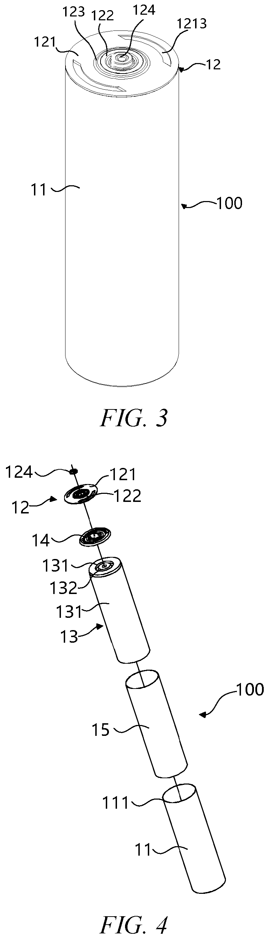

In some embodiments, as shown in FIGS. 3 and 4, the battery cell 100 includes: a housing 11, an end cap assembly 12, and an electrode assembly 13.

The housing 11 has an opening 111, and the end cap assembly 12 is used for closing the opening 111. The end cap assembly 12 includes an end cap body 121 and an electrode terminal 122. The electrode terminal 122 is connected to the end cap body 121 in an insulating manner.

The electrode assembly 13 is arranged in the housing 11. The electrode assembly 13 is of a wound structure and includes: a wound main body 131, a first tab 132 and a second tab 133. The first tab 132 and the second tab 133 have opposite polarities and are connected to the same side of the wound main body 131 along a winding axis K of the wound structure. The first tab 132 is electrically connected to the electrode terminal 122, and the second tab 133 is electrically connected to the end cap body 121.

The housing 11 is a hollow structure for receiving the electrode assembly 13, and the housing 11 has the opening 111. The end cap body 121 is used to cover the opening 111. For a cuboid battery cell 100, the end cap body 121 is of a rectangular plate-shaped structure. For a cylindrical battery cell 100, the end cap body 121 is of a disk-shaped structure. In order to implement the insulation between the electrode assembly 13 and the housing 11, an insulating film 15 is provided between the electrode assembly 13 and the housing 11.

The insulating connection between the electrode terminal 122 and the end cap body 121 may be implemented in two ways. For example, a portion of the electrode terminal 122 that is connected to the end cap body 121 is coated with an insulating layer, or an insulating assembly is provided between the electrode terminal 122 and the end cap body 121. Since the first tab 132 is electrically connected to the electrode terminal 122, and the second tab 133 is electrically connected to the end cap body 121, the end cap body 121 acts as an electrode terminal, and the insulating connection between the electrode terminal 122 and the end cap body 121 can be implement the insulation between the positive and negative electrode terminals, improving the working reliability of the battery cell 100. The "electrical connection" here includes direct connection and indirect connection.

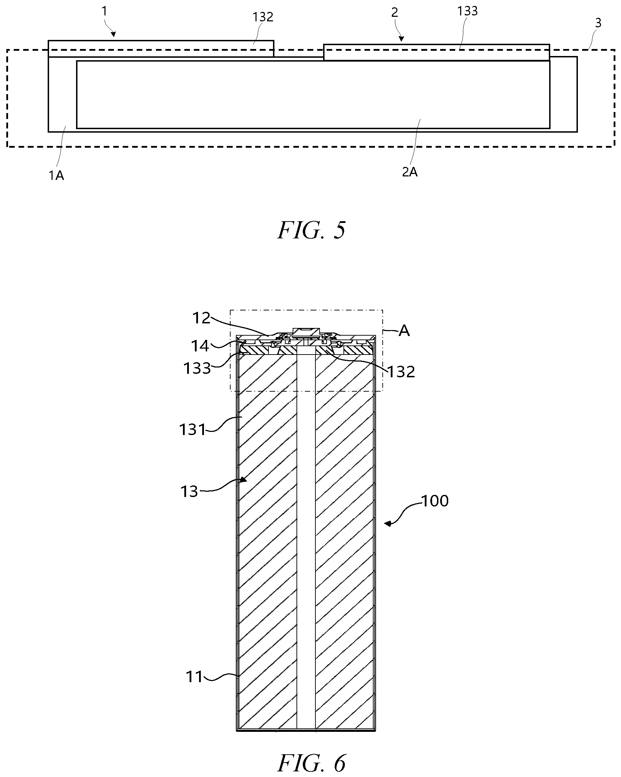

As shown in FIG. 5, the electrode assembly 13 is formed by winding a first electrode plate 1 and a second electrode plate 2 having opposite polarities. The shapes of the first electrode plate 1 and the second electrode plate 2 are basically the same, and may be elongated strip-shaped structure. The wound structure may be a cylinder, a flat body, a cuboid or in other shapes. The first electrode plate 1 includes a first main body portion 1A and a first tab 132 protruding from the first main body portion 1A. The first main body portion 1A may be coated with a first active material, and one first tab 132 may be provided, or a plurality of first tabs are arranged at intervals in a winding direction. The second electrode plate 2 includes a second main body portion 2A and a second tab 133 protruding from the second main body portion 2A. The second main body portion 2A may be coated with a second active material, and one second tab 133 may be provided, or a plurality of second tabs are arranged at intervals in a winding direction. The first active material and the second active material are different. For example, the first electrode plate 1 is a positive electrode plate, and the second electrode plate 2 is a negative electrode plate; alternatively, the first electrode plate 1 is a negative electrode plate, and the second electrode plate 2 is a positive electrode plate.

In this embodiment, the first tab 132 and the second tab 133 are led out from the same end of the wound main body 131. It is only necessary to reserve an electrical connection space at one end of the electrode assembly 13, eliminating the need for providing electrode terminals 122 respectively at two ends of the battery cell 100, so that the overall energy density of the battery cell 100 can be effectively increased. Where the capacity of the battery cell 100 is constant, the volume of the battery cell 100 can be reduced, making it easier to lay out the battery 200 in the power consuming device.

Moreover, such a battery cell 100 is provided with only one electrode terminal 122, the first tab 132 is electrically connected to the electrode terminal 122, and the second tab 133 is directly electrically connected to the end cap body 121, so that the structure and the assembly process of the battery cell 100 can be simplified. By omitting one electrode terminal, a larger space can be left on the end cap body 121, making it easy to lay out a liquid injection component and a pressure relief component on the end cap body 121, leaving ample space for arranging a temperature acquisition component, a bus member between battery cells 100, and various wires, and also contributing to increasing the cross-sectional area of the electrode terminal 122 to increase the current flow capacity of the battery cell 100. This design has greater advantages when the area of the end cap body 121 is small.

In some embodiments, the first tab 132 and the second tab 133 both extend along the entire circumference of the wound structure and are arranged spaced apart from each other in a radial direction of the wound structure. The first tab 132 and the second tab 133 can be both wound by at least one complete turn.

In this embodiment, since each tab continuously extends and is wound by at least one turn, the tab has a better connection strength with the wound main body 131 in a circumferential direction, so that a root portion of the tab has a better self-supporting effect, a crumpling phenomenon of the tab is prevented in the process of flattening the tab by applying a circumferential acting force, and the shape of a flattened region is stabilized. The effects of welding the first tab 132 to the electrode terminal 122, and the second tab 133 to the end cap body 121 are optimized, it is ensured that the electrode assembly 13 reliably transmits electric energy outwards, and the current flow capacity is improved. Furthermore, particles generated during welding of the tabs are less prone to dropping into a gap between the first electrode plate 1 and the second electrode plate 2 in the circumferential direction, so that the working reliability of the electrode assembly 13 can be improved, and the problem of short circuits or scratch of the electrode plates can be solved.

Moreover, by providing the continuous first tab 132 on part of a winding length of the first main body portion 1A, and by providing the continuous second tab 133 on part of a winding length of the second main body portion 2A, the current flow capacity of the first tab 132 and the second tab 133 can be satisfied without the need for providing discrete tabs on the entire winding length of the main body portions, so that a process of die-cutting the electrode plates can be simplified, and when the first electrode plate 1 and the second electrode plate 2 are wound to form the wound main body 131, there is also no need to perform alignment of the tabs, the process can thus be simplified, and the production efficiency of the electrode assembly 13 can be increased.

In addition, since the first tab 132 and the second tab 133 are arranged spaced apart from each other in the radial direction, a spacing region forms a liquid guiding region provided with no tab, which can not only spatially separate the first tab 132 from the second tab 133 to provide an insulating effect, but can also make a liquid electrolyte infiltrate from the liquid guiding region to the inside of the wound main body 131, ensuring the infiltration performance of the electrode assembly 13, and improving the liquid absorption effect, so that the liquid electrolyte fully reacts with active materials on the first electrode plate 1 and the second electrode plate 2 during charging and discharging processes of the battery, thereby optimizing the performance of the battery cell 100. The liquid electrolyte can be guided to flow into the interior of the wound main body 131.

On the basis, the electrode assembly 13 further includes a separator 3. The separator 3 is used for separating the first electrode plate 1 from the second electrode plate 2; and the separator 3, the first main body portion 1A and the second main body portion 2A are wound to form a wound main body 131. In an extension direction of the winding axis K, a portion of the separator 3 located in the radial spacing region extends beyond a side edge of the first main body portion 1A and a side edge of the second main body portion 2A. The separator 3 may have an elongated strip-like structure in an unwound state, and the separator 3 may be made from a polypropylene (PP) material or a polyethylene (PE) material, and the interior thereof has micro or nano-scale pores for allowing metal ions to pass through during the charging and discharging of the battery.

This structure enables a side edge of the separator 3 to extend outwardly between the first electrode plate 1 and the second electrode plate 2 in the radial spacing region and be soaked in the liquid electrolyte to allow the separator 3 to more easily absorb the liquid electrolyte under a capillary action, the infiltration performance of the electrode assembly 13 is enhanced, and the performance of the battery cell 100 is thus enhanced.

Optionally, the first tab 132 and the second tab 133 may also be arranged spaced apart from each other along the circumference of the wound structure.

In some embodiments, as shown in FIG. 6, the electrode terminal 122 is located at the center of the end cap body 121.

For example, for a structure in which the first tab 132 and the second tab 133 both extend along the entire circumference of the wound structure, and the first tab 132 is located radially inside the second tab 133, the electrode terminal 122 being located at the center of the end cap body 121 enables the first tab 132 to be connected to the electrode terminal 122 on the entire circumference, thereby improving the reliability of the electrical connection and increasing the current flow capacity.

In this embodiment, since the electrode terminal 122 is located at the center of the end cap body 121, a larger space can be left on the end cap body 121 in the entire outer peripheral region of the electrode terminal 122, making it easy to lay out a liquid injection component and a pressure relief component on the end cap body 121, leaving ample space for arranging a temperature acquisition component, a bus member between battery cells 100, and various wires, and also contributing to increasing the cross-sectional area of the electrode terminal 122 to increase the current flow capacity of the battery cell 100.

The end cap assembly 12 further includes: an insulating assembly 123 arranged between the electrode terminal 122 and the end cap body 121 and configured to connect the electrode terminal 122 to the end cap body 121 in an insulating manner.

In this embodiment, by providing the insulating assembly 123, not only can the electrode terminal 122 be mounted to the end cap body 121, but the electrode terminal 122 can also be reliably insulated from the end cap body 121, so that when the end cap body 121 serves as an electrode terminal, it is possible to prevent short circuits between the electrode terminals having different polarities, improving the working reliability of the battery cell 100.

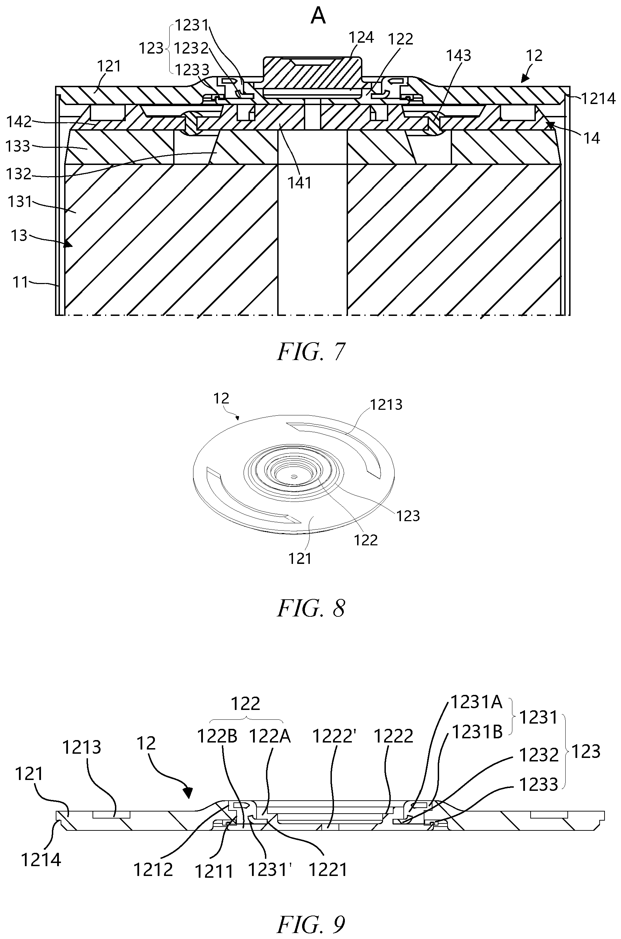

FIG. 7 is an enlarged view of part A of FIG. 6, and FIGS. 8 and 9 are respectively a schematic structural view and a sectional view of the electrode terminal 122 connected to the end cap body 121. The end cap body 121 is provided with a first through hole 1211. One end of the first through hole 1211 away from the electrode assembly 13 is provided with a first groove 1212, so that the first through hole 1211 forms a stepped hole. The electrode terminal 122 is arranged in the first through hole 1211, the electrode terminal 122 includes a terminal main body portion 122A, an outer side wall of the terminal main body portion 122A is provided with a first annular groove 1221, and the insulating assembly 123 includes: a first insulating ring 1231 and a connecting ring 1232.

The first insulating ring 1231 includes a mating section 1231A and a limiting section 1231B connected to each other. The mating section 1231A is arranged between an inner side wall of the first through hole 1211 and the outer side wall of the terminal main body portion 122A, a side wall of the mating section 1231A close to the electrode terminal 122 is provided with a second annular groove 1231', and the limiting section 1231B abuts against a bottom wall of the first groove 1212. A radially outer end of the connecting ring 1232 is embedded in the second annular groove 1231', and a radially inner end of the connecting ring 1232 is embedded in the first annular groove 1221.

The first insulating ring 1231 may be made of insulating rubber, resin or other materials.

In this embodiment, the electrode terminal 122 is connected to the first insulating ring 1231 via the connecting ring 1232, the first groove 1212 can be arranged to limit the freedom of movement of the first insulating ring 1231 toward the electrode assembly 13 along the winding axis K, and the tight fit of the first insulating ring 1231 with the first through hole 1211 and the first groove 1212 can also prevent the freedom of movement of the electrode terminal 122 away from the electrode assembly 13 along the winding axis K. In this way, the electrode terminal 122 can be fixed on the end cap body 121, and the insulation between the electrode terminal 122 and the end cap body 121 can be implemented, thereby preventing short circuits and improving the working reliability of the battery cell 100.

In some embodiments, the connecting ring 1232 takes the form of an insulating ring. For example, the connecting ring 1232 is made of insulating rubber, resin or other materials. Optionally, the first insulating ring 1231 and the connecting ring 1232 have elasticity to increase the bonding force after mating through elastic deformation.

This embodiment can further improve the insulation between the electrode terminal 122 and the end cap body 121, prevent short circuits, and improve the working reliability of the battery cell 100. Optionally, since the first insulating ring 1231 can already insulate the electrode terminal 122 from the end cap body 121, the connecting ring 1232 may also be made of a metal material to improve the connection reliability between the electrode terminal 122 and the first insulating ring 1231.

In some embodiments, as shown in FIG. 9, the electrode terminal 122 further includes an extension portion 122B. The extension portion 122B is connected to the terminal main body portion 122A and located on a side of the first annular groove 1221 close to the electrode assembly 13, and the extension portion 122B extends outwardly in the radial direction of the wound structure for supporting at least one of the first insulating ring 1231 and the connecting ring 1232; and the insulating assembly 123 further includes: a third insulating ring 1233 arranged between the extension portion 122B and the end cap body 121.

The third insulating ring 1233 is made of insulating rubber, resin or other materials. Surfaces of the first insulating ring 1231 and the connecting ring 1232 close to the extension portion 122B can be flush with each other so as to come into contact with the extension portion 122B at the same time. The extension portion 122B supports the first insulating ring 1231 and the connecting ring 1232 at the same time, which can improve the mounting stability of the insulating assembly 123.

The extension portion 122B may extend beyond the inner side wall of the first through hole 1211. There is a gap between the end cap body 121 and the extension portion 122B in the direction of the winding axis K, and the third insulating ring 1233 is arranged in the gap. Such a structure can limit the freedom of movement of the electrode terminal 122 in a direction away from the electrode assembly 13 along the winding axis K through the limiting effect of the end cap body 121 on the third insulating ring 1233 and the extension portion 122B.

Optionally, a radially outer end of the extension portion 122B is provided with a protrusion extending in the direction away from the electrode assembly 13. Correspondingly, the third insulating ring 1233 is provided with a recess in which the protrusion is embedded, to implement the connection between the extension portion 122B and the third insulating ring 1233. Such a structure can prevent the third insulating ring 1233 from being displaced in the radial direction.

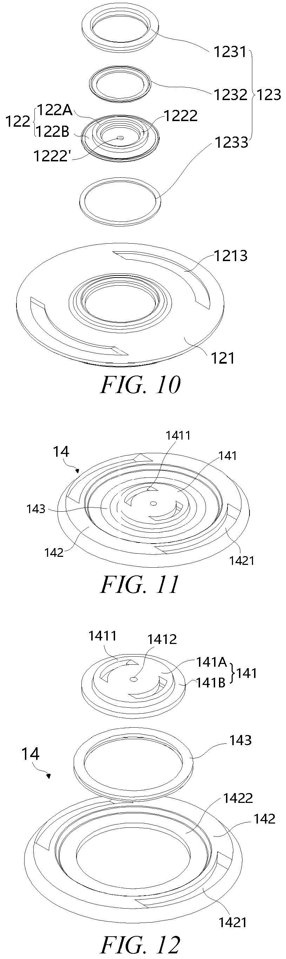

As shown in FIG. 10, the end cap assembly 12 in this embodiment facilitates the machining of individual parts by providing a combined insulating assembly 123, and can also implement the connection and insulation between the electrode terminal 122 and the end cap body 121 after combination. The insulating assembly 123 can limit the freedom of relative movement between the electrode terminal 122 and the end cap body 121 in the direction of the winding axis K, and can also limit the freedom of radial movement of the electrode terminal 122 in the first through hole 1211, so that the electrode terminal 122 is mounted more firmly. Furthermore, by providing the first insulating ring 1231, the connecting ring 1232 and the third insulating ring 1233, all possible contact positions between the electrode terminal 122 and the end cap body 121 can be fully covered to improve the insulation performance, thereby improving the working reliability of the battery cell 100. Moreover, the assembly of the battery cell 100 is facilitated by forming an integrated end cap assembly 12.

In some embodiments, a face of the end cap body 121 away from the electrode assembly 13 is provided with a fourth groove 1213, and the second tab 133 is connected to the end cap body 121 in a position corresponding to the fourth groove 1213.

The fourth groove 1213 may extend in the circumferential direction. For example, one fourth groove 1213 may be provided, and the one fourth groove 1213 may extend along part of or the entire circumference. Alternatively, a plurality of fourth grooves 1213 may be provided, and the plurality of fourth groove 1213 are arranged at intervals in the circumferential direction.

In this embodiment, the thickness of the end cap body 121 in the welding region is reduced by providing the fourth groove 1213 on the end cap body 121, and welding can be directly performed from the outside of the end cap body 121 after the end cap assembly 12 is mounted to the housing 11, so that the assembly process is simplified, and the firmness of the welding can be improved, to reliably implement the electrical connection between the end cap body 121 and the second tab 133.

In some embodiments, the end cap assembly 12 further includes a first sealing member 124, and a surface of the electrode terminal 122 away from the electrode assembly 13 is provided with a fifth groove 1222, a bottom of the fifth groove 1222 is provided with a second through hole 1222' for injecting a liquid electrolyte, and the first sealing member 124 mates with the fifth groove 1222 to seal the second through hole 1222'.

The first sealing member 124 may take the form of a sealing nail, for example, made of a rubber material, and the first sealing member 124 may be in a tight fit with or further seal, via an adhesive, the second through hole 1222'. Alternatively, the first sealing member 124 is made of a metal material, and the first sealing member 124 is metal welded to the electrode terminal 122.

In this embodiment, it will be implemented that the second through hole 1222' for injecting the liquid electrolyte is provided in the electrode terminal 122, without the need for additionally occupying the space at other positions of the end cap body 121, thereby leaving ample space for arranging other structures on the end cap body 121, contributing to increasing the circumferential size of the first sealing member 124, and making it easy to connect. When the first sealing member 124 and the end cap body 121 are welded to improve the sealing performance, welding is facilitated. Even if there is a welding defect, due to the increased distance between an outer side wall of the first sealing member 124 and the second through hole 1222', the liquid electrolyte, when flowing out, is less likely to seep out from the welded portion, providing a high tolerance for the welding defect.

Moreover, for the structure in which the first tab 132 and the second tab 133 are wound along the entire circumference, the liquid electrolyte can directly reach the hollow region of the electrode assembly 13 through the second through hole 1222' provided in the electrode terminal 122 for liquid injection, making the liquid injection process smoother. In addition, the thickness of the electrode terminal 122 in the welding region is reduced by providing the fifth groove 1222, and welding can be directly performed from the outside of the end cap body 121 after the end cap assembly 12 is mounted to the housing 11, so that the assembly process is simplified, and the firmness of the welding is improved, to reliably implement the electrical connection between the electrode terminal 122 and the first tab 132.

In some embodiments, as shown in FIGS. 11 and 12, the battery cell 100 further includes an adapter assembly 14 arranged between the end cap assembly 12 and the electrode assembly 13. The adapter assembly 14 includes: an adapter ring 142, an adapter disk 141 and a fourth insulating ring 143. The adapter ring 142 is configured to electrically connect the second tab 133 to the end cap body 121; the adapter disk 141 is arranged in a hollow region enclosed by an inner wall of the adapter ring 142, and configured to electrically connect the first tab 132 to the electrode terminal 122; and the fourth insulating ring 143 is configured to connect the adapter ring 142 to the adapter disk 141 in an insulating manner.

The adapter ring 142 and the adapter disk 141 are made of conductive materials, such as aluminum, copper and other metal materials. For example, the electrical connection may be implemented by welding or riveting. When using the welding method, it is possible to weld the first tab 132 to the adapter disk 141 first, and then weld the second tab 133 to the adapter ring 142. After the end cap assembly 12 is mounted, the electrode terminal 122 is welded to the adapter disk 141 from the outside of the end cap assembly 12, and the end cap body 121 is welded to the adapter ring 142.

In order to prevent short circuits between the adapter assembly 14 and the housing 11, an outer side wall of the adapter ring 142 may be provided as a slope, which has a gradually decreasing radial dimension from the electrode assembly 13 to the end cap assembly 12 along the winding axis K.

In order to implement liquid injection, a third through hole 1412 is provided at the center of the adapter disk 141. The third through hole 1412 is aligned and in communication with the second through hole 1222' for injecting the liquid electrolyte after removing the first sealing member 124. Since the adapter assembly 14 is formed into a disk-shaped structure as a whole, the arrangement of the liquid injection hole in a central region can prevent the impact on other parts that need to be welded or interconnected, and the injection of the liquid electrolyte directly into the hollow region of the electrode assembly 13 makes the liquid injection process smoother.

In this embodiment, the requirements for the positional relationships between the first tab 132 and the electrode terminal 122, and between the second tab 133 and the end cap body 121 can be reduced by providing the adapter assembly 14, thereby reducing the process difficulty of electrical connection, also contributing to setting the same lead-out length of the first tab 132 and the second tab 133, and reducing the machining difficulty of the electrode assembly 13. Moreover, since the plurality of tabs are relatively fluffy, it is easier to improve the connection reliability by means of the adapter assembly 14, to increase the current flow capacity of the inner and outer tabs. For example, when the electrical connection is implemented by welding, the welding trajectory between the adapter assembly 14 and the tab can be controlled, so that the firmness of the welding can be improved. In addition, it is also possible to prevent damage to the tab or the wound main body 131 during the electrical connection. For example, when welding is used, it is possible to prevent the welding energy from burning the tab, which otherwise causes the deformation of the wound main body 131, or the shedding of coating layers from the first main body portion 1A and the second main body portion 2A, etc.

In addition, by providing a combined adapter assembly 14, during assembly, the adapter ring 142, the adapter disk 141 and the fourth insulating ring 143 can be assembled into the adapter assembly 14 first, and the adapter assembly 14 is then placed on the top of the tab for welding, so that the relative position between the adapter ring 142 and the adapter disk 141 can be easily maintained, to ensure the positioning effect during welding. Moreover, when the battery is subjected to vibration and impact during use, the adapter ring 142 and adapter disk 141 limit each other, to prevent the welded portion from loosening. In addition, the adapter ring 142 and the adapter disk 141 are separated by the fourth insulating ring 143, so that short circuits between the adapter ring 142 and the adapter disk 141 can be prevented, improving the working reliability of the battery cell 100.

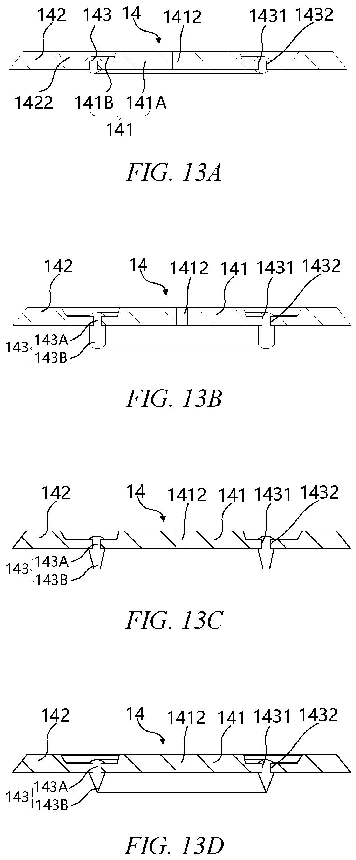

In some embodiments, as shown in FIG. 13A, an inner side wall of the fourth insulating ring 143 is provided with a third annular groove 1431, an outer side wall of the fourth insulating ring 143 is provided with a fourth annular groove 1432, the adapter disk 141 is embedded in the third annular groove 1431, and the adapter ring 142 is embedded in the fourth annular groove 1432.

The fourth insulating ring 143 may be made of insulating rubber. Through the elastic effect of the fourth insulating ring 143, the adapter disk 141 and the adapter ring 142 can be embedded in the fourth insulating ring 143. Optionally, the adapter disk 141 includes a main body portion 141A and a connecting portion 141B. The connecting portion 141B is connected to an outer ring of the main body portion 141A, and a surface of the connecting portion 141B away from the electrode assembly 13 is lower than a surface of the main body portion 141A away from the electrode assembly 13. A sixth groove 1422 is provided at a radially inner edge on a surface of the adapter ring 142 away from the electrode assembly 13. When connection is implemented via the fourth insulating ring 143, the connecting portion 141B is flush with a bottom face of the sixth groove 1422. It is possible to provide the third annular groove 1431 and the fourth annular groove 1432 of the same size, which is easy to machine. Moreover, the portion of the fourth insulating ring 143 located outside the third annular groove 1431 and the fourth annular groove 1432 may be located in a region jointly formed by the sixth groove 1422 and an outer side of the connecting portion 141B, so as to prevent the fourth insulating ring 143 from interfering with the end cap assembly 12 and reduce the height of the battery cell 100.

In this embodiment, the adapter ring 142, the adapter disk 141 and the fourth insulating ring 143 can be easily assembled into the adapter assembly 14, the connection is reliable, the assembly is facilitated, the assembly efficiency can be improved, and the components are removably connected to each other, so that where the electrical connection of the adapter assembly 14 is implemented by welding or other means, if some parts are damaged, they can be easily disconnected and replaced without the need for replacing the entire adapter assembly 14.

In some embodiments, a face of the adapter disk 141 close to the end cap assembly 12 is provided with a second groove 1411, and the first tab 132 is connected to the adapter disk 141 in a position where the second groove 1411 is provided; and/or a face of the adapter ring 142 close to the end cap assembly 12 is provided with a third groove 1421, and the second tab 133 is connected to the adapter ring 142 in a position where the third groove 1421 is provided. For example, the electrical connection may be implemented by welding, riveting, etc.

The second groove 1411 or the third groove 1421 may extend in the circumferential direction. For example, one second groove 1411 may be provided, which extends along part of the circumference or the entire circumference. The second groove 1411 may be provided on the main body portion 141A. Alternatively, a plurality of second grooves 1411 may be provided, and the plurality of second groove 1411 are arranged at intervals in the circumferential direction.

In this embodiment, the thickness of the adapter disk 141 in the welding region is reduced by providing the second groove 1411, and welding can be directly performed from the outside of the adapter disk 141 after the adapter assembly 14 is placed on the electrode assembly 13, so that the assembly process is simplified, and the firmness of the welding can be improved to reliably implement the electrical connection between the adapter disk 141 and the first tab 132; and the thickness of the adapter ring 142 in the welding region is reduced by providing the third groove 1421, and welding can be directly performed from the outside of the adapter ring 142 after the adapter assembly 14 is placed on the electrode assembly 13, so that the assembly process is simplified, and the firmness of the welding can be improved to reliably implement the electrical connection between the adapter ring 142 and the second tab 133.

In some embodiments, as shown in FIGS. 13B to 13D, the fourth insulating ring 143 includes: a main body section 143A and an extension section 143B. The main body section 143A is arranged between the adapter ring 142 and the adapter disk 141 and configured to connect the adapter ring 142 to the adapter disk 141 in an insulating manner; and the extension section 143B is connected to one end of the main body section 143A close to the electrode assembly 13, and the extension section 143B is located between the first tab 132 and the second tab 133 and configured to insulate the first tab 132 from the second tab 133.

The third annular groove 1431 and the fourth annular groove 1432 may be provided on the main body section 143A, and there may be a gap between a free end of the extension section 143B and an end face of the wound main body 131. The extension section 143B may adopt different structures. As shown in FIG. 13B, each of an inner side face and an outer side face of the extension section 143B extends along the winding axis K, and the free end is arc-shaped. As shown in FIG. 13C, the inner side face and the outer side face of the extension section 143B gradually approach each other from the main body section 143A to the electrode assembly 13, and the free end is flat, that is, the cross-section of the extension section 143B is an inverted trapezoid. As shown in FIG. 13D, the inner side face and the outer side face of the extension section 143B gradually approach and intersect each other in a direction from the main body section 143A to the electrode assembly 13, that is, the cross-section of the extension section 143B is an inverted triangle.

In this embodiment, by extending the extension section 143B of the fourth insulating ring 143 between the first tab 132 and the second tab 133, the first tab 132 can be reliably insulated from the second tab 133, preventing short circuits, and improving the working reliability of the battery cell 100. Moreover, after the fourth insulating ring 143 is mounted, the insulation between the first tab 132 and the second tab 133 is implemented, and there is no need to provide additional insulating members, so that the structure can be simplified and the assembly efficiency can be improved.

Two specific embodiments of the battery cell 100 of the present application are given below.

FIGS. 3 to 13D are schematic structural diagrams of a battery cell 100 according to a first embodiment.

As shown in FIGS. 3 and 4, the battery cell 100 includes a housing 11, an end cap assembly 12 and an electrode assembly 13. The housing 11 has an opening 111, and the end cap assembly 12 is used for closing the opening 111. The end cap assembly 12 includes an end cap body 121 and an electrode terminal 122 connected to the end cap body 121 in an insulating manner. The end cap body 121 is used for covering the opening 111. For example, the battery cell 100 may have a cylindrical shape.

The electrode assembly 13 is arranged in the housing 11. As shown in FIG. 4, the electrode assembly 13 is of a wound structure and includes a wound main body 131, and a first tab 132 and a second tab 133 having opposite polarities. The first tab 132 and the second tab 133 may be wound by at least one turn. The first tab 132 and the second tab 133 are located at the same end along the winding axis K and are arranged spaced apart from each other in a radial direction. The first tab 132 is located radially inside the second tab 133.

As shown in FIG. 5, a first electrode plate 1 includes a first main body portion 1A and the first tab 132 protruding from the first main body portion 1A, and a second electrode plate 2 includes a second main body portion 2A and the second tab 133 protruding from the second main body portion 2A. The first electrode plate 1, the second electrode plate 2 and a separator 3 are configured to be wound around the winding axis K, such that the first main body portion 1A, the second main body portion 2A and the separator 3 are superimposed to form the wound main body 131. At least one side edge of a portion of the separator 3 located in a liquid guiding region 111 may extend beyond the first main body portion 1A and the second main body portion 2A.

As shown in FIGS. 6 and 7, the first tab 132 is electrically connected to the electrode terminal 122, a center line of the electrode terminal 122 coincides with the winding axis K, and the second tab 133 is electrically connected to the end cap body 121. An insulating assembly 123 is provided between the electrode terminal 122 and the end cap body 121 to implement the insulating connection between the electrode terminal 122 and the end cap body 121, as shown in FIGS. 8 to 10. This part of the structure has been described in detail above. For example, the electrode terminal 122 may be a negative electrode terminal. The use of a copper-aluminum composite terminal can facilitate the connection with both an external circuit of the battery cell 100 and the first tab 132. Therefore, the end cap body 121 is generally made of an aluminum material, which serves as the positive electrode terminal and can be directly connected to the second tab 133.

As shown in FIGS. 11 to 13D, an adapter assembly 14 is provided between the end cap assembly 12 and the electrode assembly 13. The adapter assembly 14 includes: an adapter ring 142, an adapter disk 141 and a fourth insulating ring 143. The adapter ring 142 is configured to electrically connect the second tab 133 to the end cap body 121; the adapter disk 141 is arranged in a hollow region enclosed by an inner wall of the adapter ring 142, and configured to electrically connect the first tab 132 to the electrode terminal 122; and the fourth insulating ring 143 is configured to connect the adapter ring 142 to the adapter disk 141 in an insulating manner. An inner side wall of the fourth insulating ring 143 is provided with a third annular groove 1431, an outer side wall of the fourth insulating ring 143 is provided with a fourth annular groove 1432, the adapter disk 141 is embedded in the third annular groove 1431, and the adapter ring 142 is embedded in the fourth annular groove 1432.

In order to implement the fixation of the end cap assembly 12, as shown in FIGS. 7 and 9, an outer edge of the end cap body 121 is provided with a recess on a side toward the electrode assembly 13 to form a limiting step 1214 at the outer edge of the end cap body 121. When the end cap assembly 12 is mounted to the opening 111 of the housing 11, an end portion of the housing 11 directly abuts against the limiting step 1214, and is sealed by laser welding in a position where the housing 11 mates with the end cap body 121.

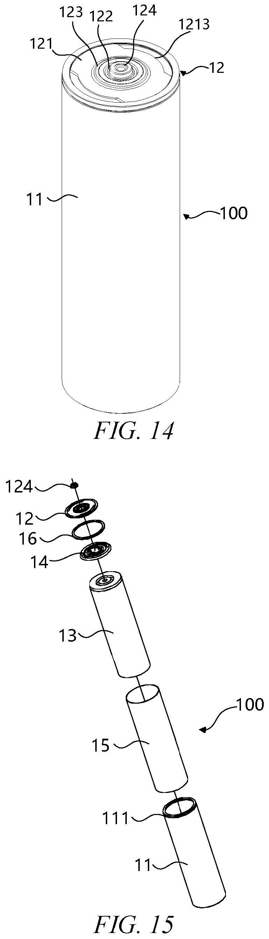

FIGS. 15 to 20 are schematic structural diagrams of a second embodiment of the present application.

The difference between this embodiment and the first embodiment is that the end cap assembly 12 and the housing 11 are fixed in different ways. As shown in FIGS. 14 and 15, a free end of the housing 11 covers an outer edge of the end cap assembly 12, and the housing 11 is fixed to the end cap assembly 12 by crimping.

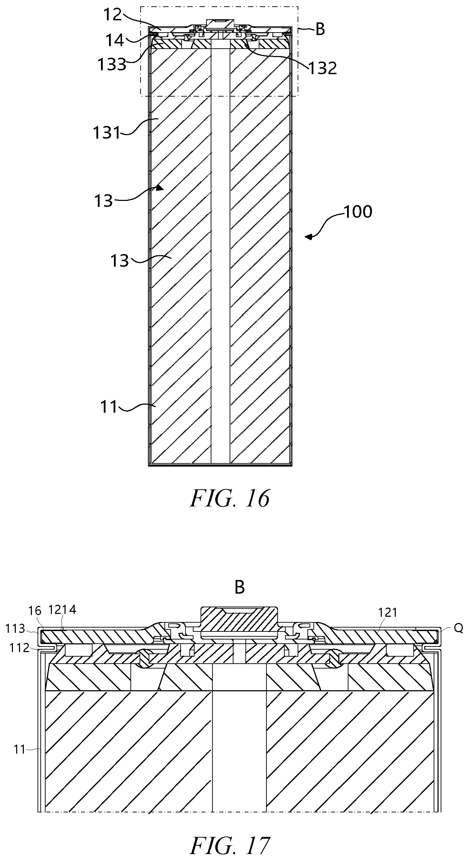

As shown in FIGS. 16 and 17, the housing 11 has a recess 112. The recess 112 is recessed inwardly as a whole relative to an outer wall of the housing 11 in the circumferential direction. The housing 11 is provided with a bent portion 113 at one end of the recess 112 close to the opening 111. The bent portion 113 has a receiving cavity Q. A radially outer end of the end cap body 121 is embedded in the receiving cavity Q. The battery cell 100 further includes a second sealing member 16. The second sealing member 16 is arranged between the bent portion 113 and the end cap body 121.

The recess 112 may extend along the entire circumference of the housing 11, or a plurality of recesses 112 may be arranged at intervals in the circumferential direction of the housing 11. The second sealing member 16 may take the form of a sealing ring, and the cross-section of the sealing ring may be of a C-shaped structure. The sealing ring is sleeved on an outer end of the end cap body 121 to insulate the end cap body 121 from the housing 11. Optionally, an extension portion may be provided at one end of the C-shaped structure close to the electrode assembly 13, and the extension portion extends in a direction toward the electrode assembly 13 to insulate the recess 112 from the internal structure of the battery cell 100. For example, the second sealing member 16 may be made of rubber or other materials.

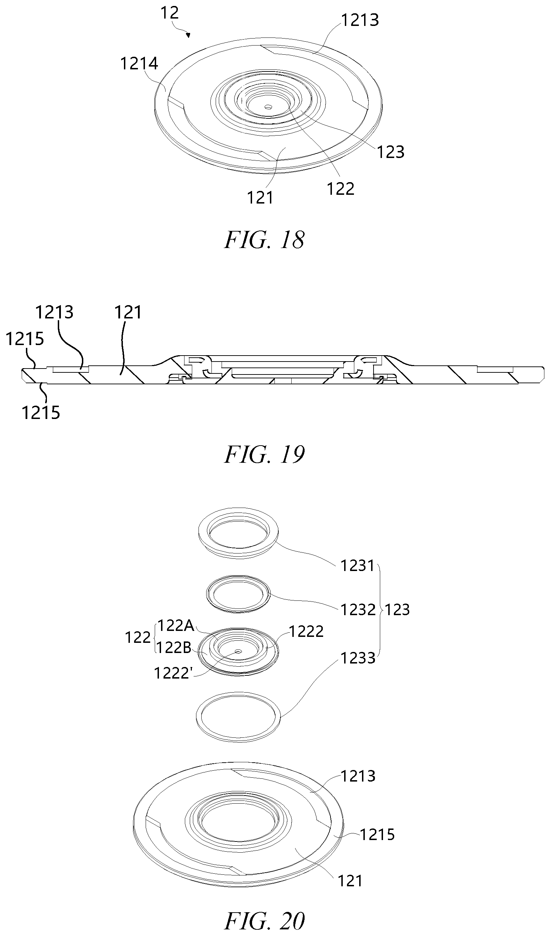

As shown in FIGS. 18 to 20, a thinned portion 1215 is provided on each of inner and outer surfaces of the outer edge of the end cap body 121, and the second sealing member 16 may be located in the region where the thinned portions 1215 are located.

During fixing of the end cap assembly 12, the second sealing member 16 is first sleeved on a radially outer end of the end cap assembly 12, the end cap assembly 12 is put into the housing 11 from the opening 111, the end cap assembly 12 abuts against the recess 112, and the housing 11 is then bent at the end of the recess 112 close to the opening 111 to form the bent portion 113. The bent portion 113 is wrapped around the second sealing member 16.

In this embodiment, crimping is used to implement the fixation between the end cap assembly 12 and the housing 11. By providing the second sealing member 16, the insulation between the end cap body 121 and the housing 11 can be implemented, so that when the end cap body 121 is used as an electrode terminal, the housing 11 can be not charged, improving the working safety of the battery cell 100.

Next, the present application further provides a method for manufacturing a battery cell 100. As shown in FIG. 20, in some embodiments, the manufacturing method includes:
a component providing step S110, during which a housing 11 and an end cap assembly 12 are provided, where the housing 11 has an opening 111, the end cap assembly 12 includes an end cap body 121 and an electrode terminal 122, and the electrode terminal 122 is connected to the end cap body 121 in an insulating manner;
an electrode assembly step S120, during which an electrode assembly 13 is prepared, and the electrode assembly 13 is put into the housing 11, where the electrode assembly 13 is of a wound structure and includes: a wound main body 131, a first tab 132 and a second tab 133, the first tab 132 and the second tab 133 having opposite polarities and being connected to the same side of the wound main body 131 along a winding axis K of the wound structure; and
an end cap mounting step S130, during which the end cap assembly 12 closes the opening 111, the first tab 132 is electrically connected to the electrode terminal 122, and the second tab 133 is electrically connected to the end cap body 121.

Steps S110-S130 are performed in a sequence.

In this embodiment, the first tab 132 and the second tab 133 are led out from the same end of the wound main body 131. It is only necessary to reserve an electrical connection space at one end of the electrode assembly 13, eliminating the need for providing electrode terminals 122 respectively at two ends of the battery cell 100, so that the overall energy density of the battery cell 100 can be effectively increased. Where the capacity of the battery cell 100 is constant, the volume of the battery cell 100 can be reduced, making it easier to lay out the battery 200 in the power consuming device.

Moreover, such a battery cell 100 is provided with only one electrode terminal 122, the first tab 132 is electrically connected to the electrode terminal 122, and the second tab 133 is directly electrically connected to the end cap body 121, so that the structure and the assembly process of the battery cell 100 can be simplified. By omitting one electrode terminal, a larger space can be left on the end cap body 121, making it easy to lay out a liquid injection component and a pressure relief component on the end cap body 121, leaving ample space for arranging a temperature acquisition component, a bus member between battery cells 100, and various wires, and also contributing to increasing the cross-sectional area of the electrode terminal 122 to increase the current flow capacity of the battery cell 100. This design has greater advantages when the area of the end cap body 121 is small.

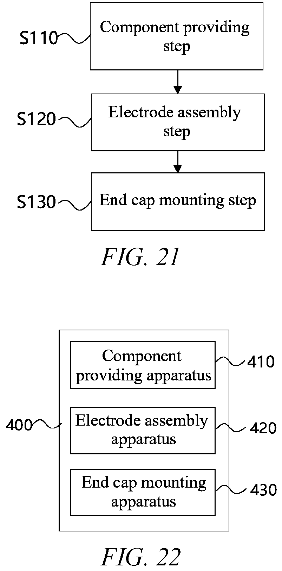

Finally, the present disclosure further provides a device 400 for manufacturing a battery cell 100. As shown in FIG. 21, in some embodiments, the manufacturing device 400 includes: a component providing apparatus 410, an electrode assembly apparatus 420 and an end cap mounting apparatus 430.

The component providing apparatus 410 is configured to provide a housing 11 and an end cap assembly 12. The housing 11 has an opening 111, the end cap assembly 12 includes an end cap body 121 and an electrode terminal 122, and the electrode terminal 122 is connected to the end cap body 121 in an insulating manner.

The electrode assembly apparatus 420 is configured to prepare an electrode assembly 13. The electrode assembly 13 is of a wound structure and includes: a wound main body 131, a first tab 132 and a second tab 133. The first tab 132 and the second tab 133 have opposite polarities and are connected to the same side of the wound main body 131 along a winding axis K of the wound structure.

The end cap mounting apparatus 430 is configured such that the end cap assembly 12 closes the opening 111, the first tab 132 is electrically connected to the electrode terminal 122, and the second tab 133 is electrically connected to the end cap body 121.

Although the present application has been described with reference to the preferred embodiments, various modifications can be made, and equivalents can be provided to substitute for the components thereof without departing from the scope of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A battery cell (100), comprising:
a housing (11) having an opening (111);
an end cap assembly (12) for closing the opening (111), the end cap assembly (12) comprising an end cap body (121) and an electrode terminal (122), the electrode terminal (122) being connected to the end cap body (121) in an insulating manner; and
an electrode assembly (13) arranged in the housing (11), the electrode assembly (13) being of a wound structure and comprising: a wound main body (131), a first tab (132) and a second tab (133), the first tab (132) and the second tab (133) having opposite polarities and being connected to the same side of the wound main body (131) along a winding axis (K) of the wound structure;
wherein the first tab (132) is electrically connected to the electrode terminal (122), and the second tab (133) is electrically connected to the end cap body (121);
wherein the end cap assembly (12) further comprises: an insulating assembly (123) arranged between the electrode terminal (122) and the end cap body (121) and configured to connect the electrode terminal (122) to the end cap body (121) in an insulating manner;
**characterized in that** the end cap body (121) is provided with a first through hole (1211), one end of the first through hole (1211) away from the electrode assembly (13) is provided with a first groove (1212), the electrode terminal (122) is arranged in the first through hole (1211), the electrode terminal (122) comprises a terminal main body portion (122A), an outer side wall of the terminal main body portion (122A) is provided with a first annular groove (1221), and the insulating assembly (123) comprises:
a first insulating ring (1231) comprising a mating section (1231A) and a limiting section (1231B) connected to each other, the mating section (1231A) being arranged between an inner side wall of the first through hole (1211) and the outer side wall of the terminal main body portion (122A), a side wall of the mating section (1231A) close to the electrode terminal (122) being provided with a second annular groove (1231'), and the limiting section (1231B) abutting against a bottom wall of the first groove (1212); and
a connecting ring (1232), a radially outer end of the connecting ring (1232) being embedded in the second annular groove (1231'), and a radially inner end of the connecting ring (1232) being embedded in the first annular groove (1221).

2. The battery cell (100) according to claim 1, wherein the first tab (132) and the second tab (133) both extend along the entire circumference of the wound structure and are arranged spaced apart from each other in a radial direction of the wound structure.

3. The battery cell (100) according to claim 1 or 2, wherein the electrode terminal (122) is located at the center of the end cap body (121).

4. The battery cell (100) according to claim 1, wherein the connecting ring (1232) takes the form of an insulating ring.

5. The battery cell (100) according to claim 1 or 4, wherein the electrode terminal (122) further comprises an extension portion (122B), the extension portion (122B) being connected to the terminal main body portion (122A) and located on a side of the first annular groove (1221) close to the electrode assembly (13), and the extension portion (122B) extending outwardly in the radial direction of the wound structure for supporting at least one of the first insulating ring (1231) and the connecting ring (1232); and the insulating assembly (123) further comprises:
a third insulating ring (1233) arranged between the extension portion (122B) and the end cap body (121).

6. The battery cell (100) according to any one of claims 1 or 4-5, further comprising an adapter assembly (14) arranged between the end cap assembly (12) and the electrode assembly (13), wherein the adapter assembly (14) comprises:
an adapter ring (142) configured to electrically connect the second tab (133) to the end cap body (121);
an adapter disk (141) arranged in a hollow region enclosed by an inner wall of the adapter ring (142), and configured to electrically connect the first tab (132) to the electrode terminal (122); and
a fourth insulating ring (143) configured to connect the adapter ring (142) to the adapter disk (141) in an insulating manner.

7. The battery cell (100) according to claim 6, wherein an inner side wall of the fourth insulating ring (143) is provided with a third annular groove (1431), an outer side wall of the fourth insulating ring (143) is provided with a fourth annular groove (1432), the adapter disk (141) is embedded in the third annular groove (1431), and the adapter ring (142) is embedded in the fourth annular groove (1432).

8. The battery cell (100) according to claim 6 or 7, wherein
a face of the adapter disk (141) close to the end cap assembly (12) is provided with a second groove (1411), and the first tab (132) is connected to the adapter disk (141) in a position where the second groove (1411) is provided; and/or
a face of the adapter ring (142) close to the end cap assembly (12) is provided with a third groove (1421), and the second tab (133) is connected to the adapter ring (142) in a position where the third groove (1421) is provided;
and/or
the fourth insulating ring (143) comprises:
a main body section (143A) arranged between the adapter ring (142) and the adapter disk (141) and configured to connect the adapter ring (142) to the adapter disk (141) in an insulating manner; and
an extension section (143B) connected to one end of the main body section (143A) close to the electrode assembly (13), the extension section (143B) being located between the first tab (132) and the second tab (133) and configured to insulate the first tab (132) from the second tab (133).

9. The battery cell (100) according to any one of claims 1-8, wherein a face of the end cap body (121) away from the electrode assembly (13) is provided with a fourth groove (1213), and the second tab (133) is connected to the end cap body (121) in a position corresponding to the fourth groove (1213);
and/or
the end cap assembly (12) further comprises a first sealing member (124), and a surface of the electrode terminal (122) away from the electrode assembly (13) is provided with a fifth groove (1222), a bottom of the fifth groove (1222) is provided with a second through hole (1222') for injecting a liquid electrolyte, and the first sealing member (124) mates with the fifth groove (1222) to seal the second through hole (1222').

10. A battery (200), comprising:
a battery cell (100) according to any one of claims 1-9; and
a case (201) for receiving the battery cell (100).

11. A power consuming device, comprising a battery (200) according to claim 10, wherein the battery (200) is configured to supply electric energy to the power consuming device.

12. A method for manufacturing a battery cell (100) according to any one of claims 1-9, the method comprising:
a component providing step, during which a housing (11) and an end cap assembly (12) are provided, wherein the housing (11) has an opening (111), the end cap assembly (12) comprises an end cap body (121) and an electrode terminal (122), and the electrode terminal (122) is connected to the end cap body (121) in an insulating manner;
an electrode assembly step, during which an electrode assembly (13) is prepared, and the electrode assembly (13) is put into the housing (11), wherein the electrode assembly (13) is of a wound structure and comprises: a wound main body (131), a first tab (132) and a second tab (133), the first tab (132) and the second tab (133) having opposite polarities and being connected to the same side of the wound main body (131) along a winding axis (K) of the wound structure; and
an end cap mounting step, during which the end cap assembly (12) closes the opening (111), the first tab (132) is electrically connected to the electrode terminal (122), and the second tab (133) is electrically connected to the end cap body (121).

13. A device (400) for manufacturing a battery cell (100) according to any one of claims 1-9, the device comprising:
a component providing apparatus (410) configured to provide a housing (11) and an end cap assembly (12), wherein the housing (11) has an opening (111), the end cap assembly (12) comprises an end cap body (121) and an electrode terminal (122), and the electrode terminal (122) is connected to the end cap body (121) in an insulating manner;
an electrode assembly apparatus (420) configured to prepare an electrode assembly (13), wherein the electrode assembly (13) is of a wound structure and comprises: a wound main body (131), a first tab (132) and a second tab (133), the first tab (132) and the second tab (133) having opposite polarities and being connected to the same side of the wound main body (131) along a winding axis (K) of the wound structure; and
an end cap mounting apparatus (430) configured such that the end cap assembly (12) closes the opening (111), the first tab (132) is electrically connected to the electrode terminal (122), and the second tab (133) is electrically connected to the end cap body (121).

## Patentansprüche

1. Batteriezelle (100), umfassend:
ein Gehäuse (11) mit einer Öffnung (111);
eine Endkappenanordnung (12) zum Verschließen der Öffnung (111), wobei die Endkappenanordnung (12) einen Endkappenkörper (121) und einen Elektrodenanschluss (122) umfasst, wobei der Elektrodenanschluss (122) isolierend mit dem Endkappenkörper (121) verbunden ist; und
eine Elektrodenanordnung (13), die in dem Gehäuse (11) angeordnet ist, wobei die Elektrodenanordnung (13) eine gewickelte Struktur aufweist und umfasst: einen gewickelten Hauptkörper (131), eine erste Lasche (132) und eine zweite Lasche (133), wobei die erste Lasche (132) und die zweite Lasche (133) entgegengesetzte Polaritäten aufweisen und entlang einer Wicklungsachse (K) der gewickelten Struktur mit derselben Seite des gewickelten Hauptkörpers (131) verbunden sind;
wobei die erste Lasche (132) elektrisch mit dem Elektrodenanschluss (122) verbunden ist und die zweite Lasche (133) elektrisch mit dem Endkappenkörper (121) verbunden ist;
wobei die Endkappenanordnung (12) ferner umfasst: eine Isolieranordnung (123), die zwischen dem Elektrodenanschluss (122) und dem Endkappenkörper (121) angeordnet und so konfiguriert ist, dass sie den Elektrodenanschluss (122) isolierend mit dem Endkappenkörper (121) verbindet;
**dadurch gekennzeichnet, dass**
der Endkappenkörper (121) mit einem ersten Durchgangsloch (1211) versehen ist, ein Ende des ersten Durchgangslochs (1211), das von der Elektrodenanordnung (13) entfernt ist, mit einer ersten Nut (1212) versehen ist, der Elektrodenanschluss (122) in dem ersten Durchgangsloch (1211) angeordnet ist, der Elektrodenanschluss (122) einen Anschlusshauptkörperabschnitt (122A) umfasst, eine äußere Seitenwand des Anschlusshauptkörperabschnitts (122A) mit einer ersten Ringnut (1221) versehen ist und die Isolieranordnung (123) umfasst:
einen ersten Isolierring (1231), der einen Passabschnitt (1231A) und einen Begrenzungsabschnitt (1231B) umfasst, die miteinander verbunden sind, wobei der Passabschnitt (1231A) zwischen einer inneren Seitenwand des ersten Durchgangslochs (1211) und der äußeren Seitenwand des Anschlusshauptkörperabschnitts (122A) angeordnet ist, eine Seitenwand des Passabschnitts (1231A), die sich in der Nähe des Elektrodenanschlusses (122) befindet, mit einer zweiten Ringnut (1231') versehen ist und der Begrenzungsabschnitt (1231B) an einer Bodenwand der ersten Nut (1212) anliegt; und
einen Verbindungsring (1232), wobei ein radial äußeres Ende des Verbindungsrings (1232) in die zweite Ringnut (1231') eingebettet ist und ein radial inneres Ende des Verbindungsrings (1232) in die erste Ringnut (1221) eingebettet ist.

2. Batteriezelle (100) nach Anspruch 1, wobei sich die erste Lasche (132) und die zweite Lasche (133) beide entlang des gesamten Umfangs der gewickelten Struktur erstrecken und in radialer Richtung der gewickelten Struktur zueinander beabstandet angeordnet sind.

3. Batteriezelle (100) nach Anspruch 1 oder 2, wobei sich der Elektrodenanschluss (122) in der Mitte des Endkappenkörpers (121) befindet.

4. Batteriezelle (100) nach Anspruch 1, wobei der Verbindungsring (1232) als Isolierring ausgeführt ist.

5. Batteriezelle (100) nach Anspruch 1 oder 4, wobei der Elektrodenanschluss (122) ferner einen Verlängerungsabschnitt (122B) umfasst, wobei der Verlängerungsabschnitt (122B) mit dem Anschlusshauptkörperabschnitt (122A) verbunden ist und sich auf einer Seite der ersten Ringnut (1221) befindet, die sich in der Nähe der Elektrodenanordnung (13) befindet, und wobei sich der Verlängerungsabschnitt (122B) in der radialen Richtung der gewickelten Struktur nach außen erstreckt, um den ersten Isolierring (1231) und/oder den Verbindungsring (1232) zu stützen; und wobei die Isolieranordnung (123) ferner umfasst:
einen dritten Isolierring (1233), der zwischen dem Verlängerungsabschnitt (122B) und dem Endkappenkörper (121) angeordnet ist.

6. Batteriezelle (100) nach einem der Ansprüche 1 oder 4-5, ferner umfassend eine Adapteranordnung (14), die zwischen der Endkappenanordnung (12) und der Elektrodenanordnung (13) angeordnet ist, wobei die Adapteranordnung (14) umfasst:
einen Adapterring (142), der so konfiguriert ist, dass er die zweite Lasche (133) elektrisch mit dem Endkappenkörper (121) verbindet;
eine Adapterscheibe (141), die in einem hohlen Bereich angeordnet ist, der von einer Innenwand des Adapterrings (142) umschlossen ist, und die so konfiguriert ist, dass sie die erste Lasche (132) elektrisch mit dem Elektrodenanschluss (122) verbindet; und
einen vierten Isolierring (143), der so konfiguriert ist, dass er den Adapterring (142) isolierend mit der Adapterscheibe (141) verbindet.

7. Batteriezelle (100) nach Anspruch 6, wobei eine innere Seitenwand des vierten Isolierrings (143) mit einer dritten Ringnut (1431) versehen ist, eine äußere Seitenwand des vierten Isolierrings (143) mit einer vierten Ringnut (1432) versehen ist, die Adapterscheibe (141) in die dritte Ringnut (1431) eingebettet ist und der Adapterring (142) in die vierte Ringnut (1432) eingebettet ist.

8. Batteriezelle (100) nach Anspruch 6 oder 7, wobei
eine Fläche der Adapterscheibe (141), die sich in der Nähe der Endkappenanordnung (12) befindet, mit einer zweiten Nut (1411) versehen ist und die erste Lasche (132) mit der Adapterscheibe (141) an einer Stelle verbunden ist, an der die zweite Nut (1411) bereitgestellt ist; und/oder
eine Fläche des Adapterrings (142), die sich in der Nähe der Endkappenanordnung (12) befindet, mit einer dritten Nut (1421) versehen ist und die zweite Lasche (133) mit dem Adapterring (142) an einer Stelle verbunden ist, an der die dritte Nut (1421) bereitgestellt ist;
und/oder
der vierte Isolierring (143) umfasst:
einen Hauptkörperabschnitt (143A), der zwischen dem Adapterring (142) und der Adapterscheibe (141) angeordnet und so konfiguriert ist, dass er den Adapterring (142) isolierend mit der Adapterscheibe (141) verbindet; und
einen Verlängerungsabschnitt (143B), der mit einem Ende des Hauptkörperabschnitts (143A) verbunden ist, das sich in der Nähe der Elektrodenanordnung (13) befindet, wobei sich der Verlängerungsabschnitt (143B) zwischen der ersten Lasche (132) und der zweiten Lasche (133) befindet und so konfiguriert ist, dass er die erste Lasche (132) von der zweiten Lasche (133) isoliert.

9. Batteriezelle (100) nach einem der Ansprüche 1-8, wobei eine Fläche des Endkappenkörpers (121), die von der Elektrodenanordnung (13) entfernt ist, mit einer vierten Nut (1213) versehen ist und die zweite Lasche (133) mit dem Endkappenkörper (121) an einer Stelle verbunden ist, die der vierten Nut (1213) entspricht;
und/oder
die Endkappenanordnung (12) ferner ein erstes Dichtungselement (124) umfasst und eine Oberfläche des Elektrodenanschlusses (122), die von der Elektrodenanordnung (13) entfernt ist, mit einer fünften Nut (1222) versehen ist, ein Boden der fünften Nut (1222) mit einem zweiten Durchgangsloch (1222') zum Einspritzen eines Flüssigelektrolyten versehen ist, und das erste Dichtungselement (124) mit der fünften Nut (1222) zusammenpasst, um das zweite Durchgangsloch (1222') abzudichten.

10. Batterie (200), umfassend:
eine Batteriezelle (100) nach einem der Ansprüche 1-9; und
eine Hülle (201) zum Aufnehmen der Batteriezelle (100).

11. Stromverbrauchende Vorrichtung, umfassend eine Batterie (200) nach Anspruch 10, wobei die Batterie (200) so konfiguriert ist, dass sie der stromverbrauchenden Vorrichtung elektrische Energie zuführt.

12. Verfahren zum Herstellen einer Batteriezelle (100) nach einem der Ansprüche 1-9, wobei das Verfahren umfasst:
einen Schritt zum Bereitstellen von Komponenten, bei dem ein Gehäuse (11) und eine Endkappenanordnung (12) bereitgestellt werden, wobei das Gehäuse (11) eine Öffnung (111) aufweist, die Endkappenanordnung (12) einen Endkappenkörper (121) und einen Elektrodenanschluss (122) umfasst und der Elektrodenanschluss (122) isolierend mit dem Endkappenkörper (121) verbunden ist;
einen Elektrodenanordnungsschritt, bei dem eine Elektrodenanordnung (13) vorbereitet wird und die Elektrodenanordnung (13) in das Gehäuse (11) eingesetzt wird, wobei die Elektrodenanordnung (13) eine gewickelte Struktur aufweist und umfasst: einen gewickelten Hauptkörper (131), eine erste Lasche (132) und eine zweite Lasche (133), wobei die erste Lasche (132) und die zweite Lasche (133) entgegengesetzte Polaritäten aufweisen und entlang einer Wicklungsachse (K) der gewickelten Struktur mit derselben Seite des gewickelten Hauptkörpers (131) verbunden sind; und
einen Endkappen-Montageschritt, bei dem die Endkappenanordnung (12) die Öffnung (111) verschließt, die erste Lasche (132) elektrisch mit dem Elektrodenanschluss (122) verbunden wird und die zweite Lasche (133) elektrisch mit dem Endkappenkörper (121) verbunden wird.

13. Vorrichtung (400) zum Herstellen einer Batteriezelle (100) nach einem der Ansprüche 1-9, wobei die Vorrichtung umfasst:
eine Komponentenbereitstellungseinrichtung (410), die so konfiguriert ist, dass sie ein Gehäuse (11) und eine Endkappenanordnung (12) bereitstellt, wobei das Gehäuse (11) eine Öffnung (111) aufweist, die Endkappenanordnung (12) einen Endkappenkörper (121) und einen Elektrodenanschluss (122) umfasst und der Elektrodenanschluss (122) isolierend mit dem Endkappenkörper (121) verbunden ist;
eine Elektrodenanordnungseinrichtung (420), die so konfiguriert ist, dass sie eine Elektrodenanordnung (13) vorbereitet, wobei die Elektrodenanordnung (13) eine gewickelte Struktur aufweist und umfasst: einen gewickelten Hauptkörper (131), eine erste Lasche (132) und eine zweite Lasche (133), wobei die erste Lasche (132) und die zweite Lasche (133) entgegengesetzte Polaritäten aufweisen und entlang einer Wicklungsachse (K) der gewickelten Struktur mit derselben Seite des gewickelten Hauptkörpers (131) verbunden sind; und
eine Endkappen-Montageeinrichtung (430), die so konfiguriert ist, dass die Endkappenanordnung (12) die Öffnung (111) verschließt, die erste Lasche (132) elektrisch mit dem Elektrodenanschluss (122) verbunden wird und die zweite Lasche (133) elektrisch mit dem Endkappenkörper (121) verbunden wird.

## Revendications

1. Élément de batterie (100), comprenant :
un boîtier (11) comportant une ouverture (111) ;
un ensemble capuchon d'extrémité (12) destiné à fermer l'ouverture (111), l'ensemble capuchon d'extrémité (12) comprenant un corps de capuchon d'extrémité (121) et une borne d'électrode (122), la borne d'électrode (122) étant connectée de manière isolante au corps de capuchon d'extrémité (121) ; et
un ensemble électrode (13) disposé dans le boîtier (11), l'ensemble électrode (13) présentant une structure enroulée et comprenant : un corps principal enroulé (131), une première languette (132) et une seconde languette (133), la première languette (132) et la seconde languette (133) ayant des polarités opposées et étant connectées au même côté du corps principal enroulé (131) selon un axe d'enroulement (K) de la structure enroulée ;
dans lequel la première languette (132) est connectée électriquement à la borne d'électrode (122), et la seconde languette (133) est connectée électriquement au corps de capuchon d'extrémité (121) ;
dans lequel l'ensemble capuchon d'extrémité (12) comprend en outre : un ensemble isolant (123) disposé entre la borne d'électrode (122) et le corps de capuchon d'extrémité (121) et configuré pour connecter la borne d'électrode (122) au corps de capuchon d'extrémité (121) de manière isolante ;
**caractérisé en ce que**
le corps de capuchon d'extrémité (121) est pourvu d'un premier trou traversant (1211), une extrémité du premier trou traversant (1211) éloignée de l'ensemble électrode (13) est pourvue d'une première rainure (1212), la borne d'électrode (122) est disposée dans le premier trou traversant (1211), la borne d'électrode (122) comprend une partie de corps principal de borne (122A), une paroi latérale externe de la partie de corps principal de borne (122A) est pourvue d'une première rainure annulaire (1221), et l'ensemble isolant (123) comprend :
un premier anneau d'isolement (1231) comprenant une section d'accouplement (1231A) et une section de limitation (1231B) reliées l'une à l'autre, la section d'accouplement (1231A) étant disposée entre une paroi latérale interne du premier trou traversant (1211) et la paroi latérale externe de la partie de corps principal de borne (122A), une paroi latérale de la section d'accouplement (1231A) proche de la borne d'électrode (122) étant pourvue d'une seconde rainure annulaire (1231'), et la section de limitation (1231B) venant en butée contre une paroi inférieure de la première rainure (1212) ; et
un anneau de connexion (1232), une extrémité radialement extérieure de l'anneau de connexion (1232) étant intégrée dans la seconde rainure annulaire (1231'), et une extrémité radialement intérieure de l'anneau de connexion (1232) étant intégrée dans la première rainure annulaire (1221).

2. Élément de batterie (100) selon la revendication 1, dans lequel la première languette (132) et la seconde languette (133) s'étendent toutes deux le long de la circonférence entière de la structure enroulée et sont disposées à distance l'une de l'autre dans une direction radiale de la structure enroulée.

3. Élément de batterie (100) selon la revendication 1 ou 2, dans lequel la borne d'électrode (122) est située au centre du corps de capuchon d'extrémité (121).

4. Élément de batterie (100) selon la revendication 1, dans lequel l'anneau de connexion (1232) prend la forme d'un anneau d'isolement.

5. Élément de batterie (100) selon la revendication 1 ou 4, dans lequel la borne d'électrode (122) comprend en outre une partie d'extension (122B), la partie d'extension (122B) étant connectée à la partie de corps principal de borne (122A) et située sur un côté de la première rainure annulaire (1221) proche de l'ensemble électrode (13), et la partie d'extension (122B) s'étendant vers l'extérieur dans la direction radiale de la structure enroulée pour supporter au moins l'un parmi le premier anneau d'isolement (1231) et l'anneau de connexion (1232) ; et l'ensemble isolant (123) comprend en outre :
un troisième anneau d'isolement (1233) disposé entre la partie d'extension (122B) et le corps de capuchon d'extrémité (121).

6. Élément de batterie (100) selon l'une quelconque des revendications 1 ou 4 et 5, comprenant en outre un ensemble adaptateur (14) disposé entre l'ensemble de capuchon d'extrémité (12) et l'ensemble électrode (13), l'ensemble adaptateur (14) comprenant :
un anneau adaptateur (142) configuré pour connecter électriquement la seconde languette (133) au corps de bouchon d'extrémité (121) ;
un disque adaptateur (141) disposé dans une région creuse entourée par une paroi interne de l'anneau adaptateur (142), et configuré pour connecter électriquement la première languette (132) à la borne d'électrode (122) ; et
un quatrième anneau d'isolement (143) configuré pour connecter l'anneau adaptateur (142) au disque adaptateur (141) de manière isolante.

7. Élément de batterie (100) selon la revendication 6, dans lequel une paroi latérale intérieure du quatrième anneau d'isolement (143) est pourvue d'une troisième rainure annulaire (1431), une paroi latérale extérieure du quatrième anneau d'isolement (143) est pourvue d'une quatrième rainure annulaire (1432), le disque adaptateur (141) est intégré dans la troisième rainure annulaire (1431), et l'anneau adaptateur (142) est intégré dans la quatrième rainure annulaire (1432).

8. Élément de batterie (100) selon la revendication 6 ou 7, dans lequel une face du disque adaptateur (141) proche de l'ensemble capuchon d'extrémité (12) est pourvue d'une deuxième rainure (1411), et la première languette (132) est connectée au disque adaptateur (141) dans une position où la deuxième rainure (1411) est prévue ; et/ou
une face de l'anneau adaptateur (142) proche de l'ensemble capuchon d'extrémité (12) est pourvue d'une troisième rainure (1421), et la seconde languette (133) est connectée à l'anneau adaptateur (142) dans une position où la troisième rainure (1421) est prévue ;
et/ou
le quatrième anneau d'isolement (143) comprend :
une section de corps principal (143A) disposée entre l'anneau adaptateur (142) et le disque adaptateur (141) et configurée pour connecter de manière isolante l'anneau adaptateur (142) au disque adaptateur (141) ; et
une section d'extension (143B) connectée à une extrémité de la section de corps principal (143A) proche de l'ensemble électrode (13), la section d'extension (143B) étant située entre la première languette (132) et la seconde languette (133) et configurée pour isoler la première languette (132) de la seconde languette (133).

9. Élément de batterie (100) selon l'une quelconque des revendications 1 à 8, dans lequel une face du corps de capuchon d'extrémité (121) éloignée de l'ensemble électrode (13) est pourvue d'une quatrième rainure (1213), et la seconde languette (133) est connectée au corps de capuchon d'extrémité (121) dans une position correspondant à la quatrième rainure (1213) ;
et/ou
l'ensemble capuchon d'extrémité (12) comprend en outre un premier élément d'étanchéité (124), et une surface de la borne d'électrode (122) éloignée de l'ensemble électrode (13) est pourvue d'une cinquième rainure (1222), un fond de la cinquième rainure (1222) est pourvu d'un second trou traversant (1222') pour injecter un électrolyte liquide, et le premier élément d'étanchéité (124) s'accouple avec la cinquième rainure (1222) pour sceller le second trou traversant (1222').

10. Batterie (200), comprenant :
un élément de batterie (100) selon l'une quelconque des revendications 1 à 9 ; et
un boîtier (201) destiné à recevoir l'élément de batterie (100).

11. Dispositif consommateur d'énergie, comprenant une batterie (200) selon la revendication 10, dans lequel la batterie (200) est configurée pour fournir de l'énergie électrique au dispositif consommateur d'énergie.

12. Procédé de fabrication d'un élément de batterie (100) selon l'une quelconque des revendications 1 à 9, le procédé comprenant :
une étape de fourniture de composants, à laquelle un boîtier (11) et un ensemble capuchon d'extrémité (12) sont fournis, le boîtier (11) présentant une ouverture (111), l'ensemble capuchon d'extrémité (12) comprenant un corps de capuchon d'extrémité (121) et une borne d'électrode (122), et la borne d'électrode (122) étant connectée de manière isolante au corps de capuchon d'extrémité (121) ;
une étape d'assemblage d'électrode, à laquelle un ensemble électrode (13) est préparé, et l'ensemble électrode (13) est placé dans le boîtier (11), l'ensemble électrode (13) présentant une structure enroulée et comprenant : un corps principal enroulé (131), une première languette (132) et une seconde languette (133), la première languette (132) et la seconde languette (133) ayant des polarités opposées et étant connectées au même côté du corps principal enroulé (131) selon un axe d'enroulement (K) de la structure enroulée ; et
une étape de montage du capuchon d'extrémité, à laquelle l'ensemble capuchon d'extrémité (12) ferme l'ouverture (111), la première languette (132) est connectée électriquement à la borne d'électrode (122), et la seconde languette (133) est connectée électriquement au corps de capuchon d'extrémité (121).

13. Dispositif (400) de fabrication d'un élément de batterie (100) selon l'une quelconque des revendications 1 à 9, le dispositif comprenant :
un appareil de fourniture de composants (410) configuré pour fournir un boîtier (11) et un ensemble capuchon d'extrémité (12), le boîtier (11) présentant une ouverture (111), l'ensemble capuchon d'extrémité (12) comprenant un corps de capuchon d'extrémité (121) et une borne d'électrode (122), et la borne d'électrode (122) étant connectée de manière isolante au corps de capuchon d'extrémité (121) ;
un appareil d'assemblage d'électrode (420) configuré pour préparer un ensemble électrode (13), dans lequel l'ensemble électrode (13) présente une structure enroulée et comprend : un corps principal enroulé (131), une première languette (132) et une seconde languette (133), la première languette (132) et la seconde languette (133) ayant des polarités opposées et étant connectées au même côté du corps principal enroulé (131) selon un axe d'enroulement (K) de la structure enroulée ; et
un appareil de montage de capuchon d'extrémité (430) configuré de telle sorte que l'ensemble capuchon d'extrémité (12) ferme l'ouverture (111), la première languette (132) est connectée électriquement à la borne d'électrode (122) et la seconde languette (133) est connectée électriquement au corps de capuchon d'extrémité (121).
